# EUROPÄISCHE PATENTSCHRIFT

(11) **EP 3 507 662 B1**
(45) Veröffentlichungstag und Bekanntmachung des Hinweises auf die Patenterteilung: **07.10.2020**
(21) Anmeldenummer: 17780978.7
(22) Anmeldetag: 28.08.2017
(51) Int. Cl.: G05B 19/418

(54) **VERFAHREN ZUM BETREIBEN EINES INDUSTRIELLEN STEUERUNGSSYSTEMS SOWIE ENTSPRECHENDES STEUERUNGSSYSTEM**
METHOD FOR OPERATING AN INDUSTRIAL CONTROL SYSTEM AND CORRESPONDING CONTROL SYSTEM
PROCÉDÉ DE FONCTIONNEMENT D'UN SYSTÈME DE COMMANDE INDUSTRIELLE ET SYSTÈME DE COMMANDE CORRESPONDANT

(30) Priorität: 01.09.2016 AT 507742016
(43) Veröffentlichungstag der Anmeldung: 10.07.2019
(73) Patentinhaber: KEBA AG, 4041 Linz (AT)
(72) Erfinder: FISCHER, Harald, 5323 Ebenau (AT)
(74) Vertreter: Burger, Hannes
(86) Internationale Anmeldenummer: PCT/AT2017/060208
(87) Internationale Veröffentlichungsnummer: WO 2018/039692

(56) Entgegenhaltungen:
- EP-A1- 1 659 466
- US-A1- 2011 153 034

## Beschreibung

Die Erfindung betrifft ein Verfahren zum Betreiben eines industriellen Steuerungssystems sowie ein entsprechendes Steuerungssystem, wie dies in den Ansprüchen 1 und 15 angegeben ist.

In Zusammenhang mit Steuerungssystemen zur Bedienung und Automatisierung von Maschinen oder vergleichbaren technischen Anlagen sind im Wesentlichen zwei Grundkonzepte bekannt. Einerseits ist es möglich stationäre, das heißt immobil angeordnete Bedieneinheiten vorzusehen. Andererseits ist es auch bekannt, zumindest eingeschränkt mobile Bedieneinheiten, insbesondere durch eine Bedienperson zu unterschiedlichen Einsatzorten verbringbare Bedieneinheiten vorzusehen. In der Praxis kommen auch industrielle Steuerungssysteme vor, in welchen beide Konzepte verwirklicht sind. Die stationären Bedieneinheiten in solchen industriellen Steuerungssystemen können dabei durch fix an der Maschine verbaute Bedienpanels gebildet sein, welche aus einem Bildschirm zur Anzeige von systemrelevanten Daten bzw. Informationen und aus einem Tastenfeld zur Bedienung gebildet sein können. In neueren Generationen kann dabei auf ein umfangreiches Tastenfeld verzichtet werden und kann stattdessen ein größerer Bildschirm mit Touch-Screen vorgesehen sein.

Mobile Bedieneinheiten können dabei entsprechend einer gängigen Maßnahme mit einem flexiblen, mehradrigen Kabel, welches eine bestimmte Länge aufweist, mit der Maschine fix verbunden sein. Durch das Kabel ist dabei die Bedienung oder Beobachtung der Maschine bzw. der Anlage ausgehend von verschiedenen Positionen möglich. Die Bedienperson ist dabei im Wesentlichen nur durch die Kabellänge in ihrer örtlichen Variabilität limitiert.

Seitens der Industrie besteht dabei verstärkt der Wunsch, solche mobilen Handbediengeräte wahl- bzw. bedarfsweise an verschiedenste Maschinen bzw. deren Steuerungsvorrichtungen anbinden zu können. Dadurch können sich solche Handbediengeräte bzw. Steuerungssysteme relativ rasch amortisieren. Darüber hinaus ist es aus steuerungstechnischer Sicht in vielen Fällen auch gar nicht notwendig, dass ein Handbediengerät permanent mit der Steuervorrichtung der jeweiligen Maschine bzw. Anlage in Verbindung steht.

Zunehmend werden auch separat angeordnete Anschlussboxen bzw. Anschlusseinheiten ausgebildet, gegenüber welchen solche mobilen, kabelgebundenen Bedieneinheiten bedarfsweise an- und abgekoppelt werden können. Bei diesen Anschlussboxen kann dabei zwischen hot-plug-fähigen und nicht hot-plug-fähigen Anschlussboxen unterschieden werden. Hot-plug-Fähigkeit bedeutet dabei, dass die mobile, kabelgebundene Bedieneinheit während des laufenden Betriebs an- bzw. abgekoppelt werden kann, ohne dadurch eine Unterbrechung der Steuerungsabläufe zu verursachen bzw. erforderlich zu machen. Jüngere Generationen von solchen mobilen Bedieneinheiten können auch komplett kabellos ausgeführt sein und weisen dementsprechend relativ hoch entwickelte, funktechnische Kommunikationsschnittstellen auf. Vor allem bei den für eine drahtlose Kommunikation vorgesehenen Bedieneinheiten gibt es dabei erheblichen technischen Aufwand und sind umfassende Vorkehrungen zu treffen, was die Wirkbereichsbeschränkung und das Pairing bzw. das Zuordnungsverfahren zwischen einer solchen mobilen Bedieneinheit und der damit beeinflussbaren Steuerung betrifft.

Die EP1404062A1 offenbart ein Kommunikationssystem mit einer Mehrzahl von an eine Datenleitung angeschlossenen Teilnehmern, insbesondere in Art von Maschinensteuerungen. An verschiedenen Stellen des drahtgebundenen Netzwerkes sind Anschlusseinheiten vorgesehen, welche zum bedarfsweisen Anschließen eines portablen Bedien- und Visualisierungsterminals vorgesehen sind. Die jeweiligen Anschlusseinheiten umfassen jeweils eine eindeutige Kennung, welche von einem daran angeschlossenen Bedien- und Visualisierungsterminal auslesbar ist. Durch diese auslesbare, eindeutige Kennung in den einzelnen Anschlusseinheiten kann eine eindeutige Identifikation der der jeweiligen Anschlusseinheit eindeutig zugeordneten Maschinensteuerung erreicht werden. Insbesondere wird durch diese eindeutige Kennung das portable Bedien- und Visualisierungsterminal an die jeweils beabsichtigte Maschinensteuerung datentechnisch angebunden bzw. dem richtigen Anlagenbereich zugeordnet. Diese Druckschrift befasst sich daher mit der selektiven Anmeldung bzw. eindeutigen Zuordnung eines portablen Bedien- und Visualisierungsterminals an eine bestimmte Maschine bzw. an deren Steuervorrichtung.

Ähnliche Steuerungssysteme, bei welchen eine eindeutige Identifikation ausgehend von wenigstens einer stationären Steuervorrichtung oder von einer stationären Anschlussbox an wenigstens ein portables Terminal übertragen wird, um den Anmeldungs- bzw. Zuordnungsprozess zu ermöglichen, sind beispielsweise aus der US2011153034, der JP04085952B2, der JP04990504B2 oder der EP1659466A1 bekannt. All diese Druckschriften befassen sich mit dem Anmelden eines portablen, elektronischen Terminals an eine bestimme Maschine bzw. an eine bestimmte Steuervorrichtung und mit dem Senden einer Identifikation an das mobile Terminal.

Zudem sind aus dem Stand der Technik Steuerungssysteme mit technischen Maßnahmen bekannt, welche zur Herstellung einer gegenüber Irrtümern möglichst sicheren datentechnischen Verbindung zwischen einem portablen Terminal und einer Maschine bzw. dessen Steuerung dienen. Dabei wird eine eindeutige, unverkennbare Identifikation zwischen dem portablen Terminal und der Maschinensteuerung ausgetauscht, also bidirektional übertragen. Derartige Pairing-Maßnahmen sind unter anderem aus der DE10110776A1, der EP1866712B1, der DE102010025781A1 oder der EP1716982A1 bekannt. Mit diesen Pairing-Maßnahmen kann zwar eine sichere bzw. eindeutige Zuordnung zwischen einem portablen Terminal und der jeweiligen Maschinensteuerung aufgebaut werden, es verbleiben jedoch weitere Aspekte, welche für ein sicheres bzw. möglichst gefahrloses Betreiben eines umfassenden Steuerungssystems zweckmäßig sind. Insbesondere können in Zusammenhang mit technologisch gemischt aufgebauten oder in Zusammenhang mit allmählich erweiterten Steuerungssystemen Probleme auftreten, für welchen bislang keine praktikable Lösung bekannt ist.

Der vorliegenden Erfindung liegt die Aufgabe zugrunde, ein verbessertes, industrielles Steuerungssystem bzw. ein Verfahren zum Betreiben eines Steuerungssystems zu schaffen, wobei das entsprechende Steuerungssystem eine Mehrzahl von stationären Steuervorrichtungen für Maschinen und eine Mehrzahl von wahlweise daran anbindbaren Typen von mobilen Handbediengeräten umfassen kann, und wobei trotz eines möglicherweise eintretenden, technologischen Mischbetriebes in Verbindung mit unterschiedlich ausgestalteten mobilen Handbediengeräten ein betriebssicherer bzw. möglichst fehlervermeidender Betrieb eines solchen Steuerungssystems gewährleistet werden kann.

Diese Aufgabe der Erfindung wird durch die Maßnahmen gemäß Anspruch 1 und durch ein Steuerungssystem mit den Merkmalen gemäß Anspruch 15 gelöst.

Ein Vorteil der erfindungsgemäßen Maßnahmen liegt darin, dass damit ein industrielles Steuerungssystem geschaffen werden kann, in welchem das Konzept der bedarfsweise an- und abkoppelbaren, mobilen Handbediengeräte, insbesondere der Wireless-Geräte, aber auch der bedarfsweise an- und absteckbaren kabelgebundenen Geräte, relativ problemlos umgesetzt werden kann. Dabei können durch die erfindungsgemäßen Maßnahmen unterschiedliche normative Anforderungen auch dann erfüllt bzw. sichergestellt werden, wenn von einer Bedienperson beabsichtigt ist, technologisch verschiedenartige bzw. aus unterschiedlichen Herstellungszeiträumen stammende Handbediengeräte via deren potentiell kommunikationskompatible Schnittstellen in das Steuerungssystem einzubinden. Insbesondere können durch die erfindungsgemäßen Maßnahmen verschiedenartige, aber stets taugliche Typen bzw. Herstellungsserien von mobilen Handbediengeräten, insbesondere unterschiedliche Endgeräte-Versionen, welche unter Umständen auch verschiedene Softwarestände aufweisen können, eingesetzt werden, ohne dass es dadurch zu sicherheitstechnischen Problematiken kommt.

Durch die erfindungsgemäßen Maßnahmen wird nämlich sichergestellt, dass im Vorfeld des Aufbaus einer steuerungstechnischen Wechselwirkung, während welcher potentiell gefahrbringende Steuerbefehle ausgeführt werden könnten, überprüft wird, ob die jeweilige Kombination zwischen dem mobilen Handbediengerät und der Steuervorrichtung einen sicheren Betrieb des Steuerungssystems bzw. der jeweiligen Maschine oder Anlage ermöglicht bzw. gewährleistet. Das heißt, dass vor dem Aufbau einer steuerungstechnischen Wechselwirkung eine zumindest teilweise automatisierte oder vollautomatische Überprüfung der hardwareund softwaretechnischen Kompatibilität zwischen dem zur Anbindung bzw. Ankopplung vorgesehenen mobilen Handbediengerät und der jeweiligen Steuervorrichtung bzw. dem entsprechenden Steuerungssystem erfolgt. Durch diese Vorab-Kompatibilitätsprüfung ist insbesondere eine hohe Gesamtsicherheit des Steuerungssystems erzielbar. Beispielsweise kann dadurch vermieden werden, dass trotz eines in kommunikationstechnischer Sicht grundsätzlich anbindbaren mobilen Handbediengeräts eine steuerungstechnische Wirkverbindung unterbleibt bzw. der Bedienperson eine Eingreifbarkeit in die Steuerungs- bzw. Bewegungsabläufe untersagt wird, wenn die diversen normativen Vorgaben und Sicherheitsanforderungen durch die jeweilige Kombination bzw. durch die technologische Ausführung des mobilen Handbediengerätes nicht erfüllt werden können. Dies wird in einfacher Art und Weise durch die Übertragung einer datentechnischen Kennung ausgehend vom Handbediengerät an die jeweilige Steuervorrichtung bzw. an das Steuerungssystem und durch die Evaluierung dieser datentechnischen Kennung seitens der Steuervorrichtung bzw. des Steuerungssystems bewerkstelligt, wobei diese Kennung hardware- und softwaretechnische Parameter des Handbediengerätes umfasst. Dieser Kompatibilitätscheck anhand einer speziellen datentechnischen Kennung, welche die jeweilige technische Ausprägung des mobilen Handbediengerätes charakterisiert, ist dabei einfach und relativ kostengünstig umsetzbar, sodass trotz eines erheblichen Komfort- und Sicherheitsgewinns die Kosten zur Implementierung eines derartigen Steuerungssystems möglichst gering gehalten werden können.

Hinzu kommt, dass mit den erfindungsgemäßen Maßnahmen auch die für verschiedene Länder oftmals unterschiedlichen normativen Anforderungen an eine automatisierte technische Anlage bzw. an dessen Steuerungssystem in zuverlässiger und praktikabler Art und Weise erfüllt werden können und letztendlich eine hohe operative Sicherheit von entsprechend umgesetzten Steuerungssystemen erreicht werden kann. Unter anderem eine umfangreiche Einhaltung von länder- und/oder anlagenspezifisch unterschiedlichen Vorgaben bzw. Kriterien für einen sicheren Betrieb eines Steuerungssystems kann durch die anspruchsgemäßen Maßnahmen mit relativ geringem Aufwand besonders zuverlässig gewährleistet werden.

Zweckmäßig sind auch die Maßnahmen gemäß Anspruch 2, da dadurch automatisiert und zugleich fehlersicher festgestellt werden kann, ob die Funktionsweise bzw. der Funktionsumfang des Handbediengerätes den technischen Ausprägungen oder Anforderungen des Steuerungssystems entspricht, insbesondere ob ausreichende Kompatibilität vorliegt, um einen sicheren, den normativen Vorgaben entsprechenden Betrieb des Steuerungssystems gewährleisten zu können.

Ferner kann durch die Maßnahmen gemäß Anspruch 3 automatisiert evaluiert werden, ob die hardwaretechnischen Komponenten und deren Betriebssoftware den Anforderungen der jeweiligen Steuervorrichtung bzw. des gesamten Steuerungssystems entsprechen. Gewissermaßen versteckte Inkompatibilitäten, welche in Einzelfällen bzw. zeitlichen Sonderfällen kritisch werden könnten, insbesondere allfällig auftretende Gefahrensituationen für Personen bzw. Maschinenteile, können dadurch zuverlässig hintangehalten werden.

Entsprechendes gilt für die Maßnahmen gemäß Anspruch 4. Insbesondere kann dadurch sichergestellt werden, dass die im Handbediengerät implementierte Sicherheitstechnologie bzw. Sicherheitsfunktionalität den Anforderungen der jeweiligen Steuervorrichtung bzw. des Steuerungssystems entspricht.

Von besonderem Vorteil sind insbesondere die Maßnahmen gemäß Anspruch 5. Dadurch kann eine sicherheitstechnische Verwendbarkeit bzw. eine sicherheitstechnisch unbedenkliche Einsetzbarkeit des Handbediengerätes im jeweiligen Steuerungssystem automatisiert überprüft werden, bevor potentiell gefahrbringende Steuerabläufe beeinflusst bzw. kontrolliert oder erstellt werden können. Insbesondere kann dadurch im Hinblick auf unterschiedliche Typen von an Handbediengeräten grundsätzlich implementierbaren Sicherheitsschaltelementen gewährleistet werden, dass eine jeweils optimale bzw. sichere und/oder den normativen Vorgaben entsprechende Kombination und Wechselwirkung zwischen dem Handbediengerät bzw. zwischen dessen Sicherheitsschaltelement und der stationären Steuervorrichtung bzw. in Bezug auf das gesamte Steuerungssystem aufgebaut wird. Im Falle von ungeeigneten Kombinationen wird erfindungsgemäß zumindest eine steuerungstechnische Beeinflussung bzw. Abgabe von potentiell sicherheitskritischen Steuerabläufen bzw. Steuerbefehlen automatisiert unterbunden und somit das Risiko von gefahrbringenden Situationen hintangehalten. Ein Sicherheitsverlust aufgrund von Sicherheitsschaltelementen, welche im Hinblick auf eine zu beeinflussende Maschine bzw. Anlage letztendlich nicht geeignet oder nicht optimal sind, kann somit besonders zuverlässig unterbunden werden.

Ferner sind die Maßnahmen gemäß Anspruch 6 vorteilhaft, da dadurch die jeweilige technische Ausprägung der an den diversen Handbediengeräten jeweils verbauten Sicherheitsschaltelemente anhand der datentechnischen Kennung repräsentiert ist. Insbesondere kann dadurch in Bezug auf unterschiedliche Typen oder technische Ausführungen von Abschaltelementen, beispielsweise hinsichtlich normierter Not-Aus-Schalter, allgemeiner Stopp-Elemente oder dreistufiger Zustimmtaster mit Panik-Stopp-Funktion absolut fehlerfrei bzw. klar unterschieden werden. Dadurch kann insbesondere automatisiert unterbunden werden, dass ein den Sicherheitsanforderungen nicht entsprechendes Sicherheitsschaltelement bzw. Abschaltelement, welches an einem zur steuerungstechnischen Ankopplung vorgesehenen Handbediengerät implementiert bzw. verbaut ist, in das Steuerungssystem bzw. in die jeweilige stationäre Steuervorrichtung steuerungstechnisch eingebunden wird. Dadurch wird sichergestellt, dass eine das Handbediengerät nutzende Bedienperson bei einer plötzlich auftretenden Gefahrensituation die jeweilige Abschaltung bzw. Beendigung des sicherheitskritischen Steuerungsablaufes bzw. der potentiell sicherheitskritischen Bewegung der Maschine bzw. Anlage prompt und gesichert vornehmen kann. Ferner kann dadurch den jeweiligen normativen Sicherheitsanforderungen, welche länderspezifisch unterschiedlich sein können und/oder anlagenspezifisch variieren können, verbessert Rechnung getragen werden und können so unzulässige bzw. sicherheitstechnisch bedenkliche Kombinationen zwischen einer stationären Steuervorrichtung bzw. Maschine und einer bestimmten Ausführung bzw. Type eines Handbediengerätes zuverlässig und insbesondere automatisiert unterbunden werden. Wesentlich ist dabei, dass die datentechnische Kennung des Handbediengerätes die jeweilige technische Ausführung bzw. Sicherheitskategorie des zumindest einen Sicherheitsschaltelementes, insbesondere des zumindest einen am Handbediengerät verbauten Abschaltelementes, repräsentiert bzw. charakterisiert. Die jeweilige datentechnische Kennung soll dabei also die Type bzw. technische Ausprägung des Sicherheitsschaltelementes derart wiederspiegeln, dass eine automatisierte Evaluierungsmöglichkeit betreffend den beabsichtigten Aufbau einer steuerungstechnischen Wechselwirkung zuverlässig ermöglicht ist.

Es wird aber auch durch die Maßnahmen gemäß Anspruch 7 der Sicherheitslevel der Kombination aus Handbediengerät und Steuerungssystem jeweils automatisiert überprüft bzw. auf den jeweils erforderlichen Standard gehoben. Insbesondere können auch dadurch, dass bei einem zur steuerungstechnischen Einbindung vorgesehenen Handbediengerät ungeeignete bzw. nur bedingt optimale Bedienelemente vorgesehen sind, sicherheitskritische Situationen entstehen. Derartiges wird durch die Maßnahmen gemäß Anspruch 7 zuverlässig unterbunden. Beispielsweise wäre es sicherheitskritisch bedenklich, wenn die Steuervorrichtung bzw. eine damit anzusteuernde Verstell- bzw. Bewegungsachse ein mehrachsiges Bedienelement erfordert, beispielsweise einen zwei- oder dreiachsigen Joystick, am Handbediengerät aber lediglich einachsige Bedienelemente ausgeführt sind, beispielsweise in Form von mehreren, separat ausgebildeten Schaltwippen oder Drehreglern für die diversen Achsen.

Von besonderem Vorteil sind auch die Maßnahmen gemäß Anspruch 8, da dadurch bestehende Steuerungssysteme in einfacher Art und Weise adaptiert bzw. relativ kostengünstig aufgerüstet werden können, um die erfindungsgemäßen Maßnahmen implementieren zu können. Insbesondere ist dadurch eine gewisse Nachrüstbarkeit bestehender Steuerungssysteme in einfacher und auch relativ kostengünstiger Art und Weise möglich. Die Anschlusseinheit kann dabei als peripher ausgebildete Zusatz- oder Teilkomponente der jeweiligen Steuervorrichtung bzw. des Steuerungssystems verstanden werden.

Zweckmäßig sind in diesem Zusammenhang auch die Maßnahmen gemäß Anspruch 9, da dadurch die baulich eigeständig ausgeführte Anschlusseinheit unter anderem die Aufgabe der sicherheitstechnischen Evaluierung erfüllen kann bzw. deren Steuerungs- bzw. Überprüfungslogik primär die entsprechende Sicherheitsfunktionalität umsetzen kann.

Durch die Maßnahmen gemäß Anspruch 10 erfolgt eine automatisierte Evaluierung und kann somit die Zuverlässigkeit der Überprüfung gesteigert werden. Insbesondere können dadurch benutzerseitige Bedienhandlungen erübrigt bzw. benutzerseitig initiierte Aufrufe von Überprüfungsroutinen vermieden werden. Dies begünstigt die Gesamtsicherheit bzw. Zuverlässigkeit des entsprechenden Systems.

Zweckmäßig sind auch die Maßnahmen gemäß Anspruch 11, da dadurch in Zusammenhang mit einer von einer Bedienperson bewusst initiierten Außer-Kraft-Setzung (Override) der Sicherheitsfunktionalität vereinzelt auch den normativen Vorgaben nicht bzw. nur teilweise entsprechende Handbediengeräte zumindest vorübergehend bzw. temporär in das Steuerungssystem eingebunden werden können. Hierfür sind jedoch bewusst bzw. manuell durchzuführende Freischaltungen an der Anschlusseinheit bzw. im Steuerungssystem erforderlich.

Vorteilhaft sind auch die Maßnahmen gemäß Anspruch 12, da dadurch einer Bedienperson unmissverständlich signalisiert wird, ob das am Handbediengerät verbaute Sicherheitsschaltelement funktionsverfügbar ist, insbesondere im Ernst- bzw. Notfall betätigt werden kann und daraufhin das Steuerungssystem bzw. eine entsprechende Maschine oder Anlage mit hoher Zuverlässigkeit in einen sicheren Zustand überführbar bzw. eine unmittelbare Abschaltung ermöglicht ist. Weiters wird dadurch der Bedienperson eine Rückmeldung gegeben und so eine gewisse Sicherheit vermittelt, wodurch die benutzerseitige Akzeptanz für das entsprechende Steuerungssystem weiter gesteigert werden kann.

Zweckmäßig sind auch die Maßnahmen gemäß Anspruch 13, da dadurch für eine Bedienperson unmissverständlich erkennbar ist, ob das am Handbediengerät implementiere Sicherheitsschaltelement derart in das Steuerungssystem eingebunden ist, dass im Bedarfsfall eine umgehende Abschaltung und eine zuverlässige Verfügbarkeit dieser Abschaltfunktion gegeben ist. Auch dadurch kann die Sicherheit des entsprechenden Steuerungssystems gesteigert werden. Eine derartige Ausführung ist insbesondere in Verbindung mit draht- bzw. kabellos an eine Steuervorrichtung bzw. an das Steuerungssystem anbindbaren Handbediengeräten von Vorteil, aber auch bei kabelgebundenen Handbediengeräten zweckmäßig.

Durch die Maßnahmen gemäß Anspruch 14 kann eine praktikable Evaluierung der Zulässigkeit oder Nicht-Zulässigkeit bzw. des Umfanges der Zulässigkeit der von einer Bedienperson geplanten bzw. vorgesehen Kopplung eines Handbediengerätes gegenüber der jeweiligen Steuervorrichtung erzielt werden.

Die mit dem Steuerungssystem gemäß Anspruch 15 erzielbaren technischen Wirkungen und vorteilhaften Effekte sind den vorstehenden sowie den nachfolgenden Beschreibungsteilen zu entnehmen.

Zum besseren Verständnis der Erfindung wird diese anhand der nachfolgenden Figuren näher erläutert.

Es zeigen jeweils in stark vereinfachter, schematischer Darstellung:
- Fig. 1: eine mittels einem elektronischen Steuerungssystem kontrollierte Fertigungsanlage, welches Steuerungssystem mehrere stationäre Steuervorrichtungen und wahl- bzw. bedarfsweise einbindbare, mobile Handbediengeräte umfasst;
- Fig. 2: ein Blockschaltbild einer Anschlusseinheit, die in einem Steuerungssystem gemäß Fig. 1 implementiert sein kann.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

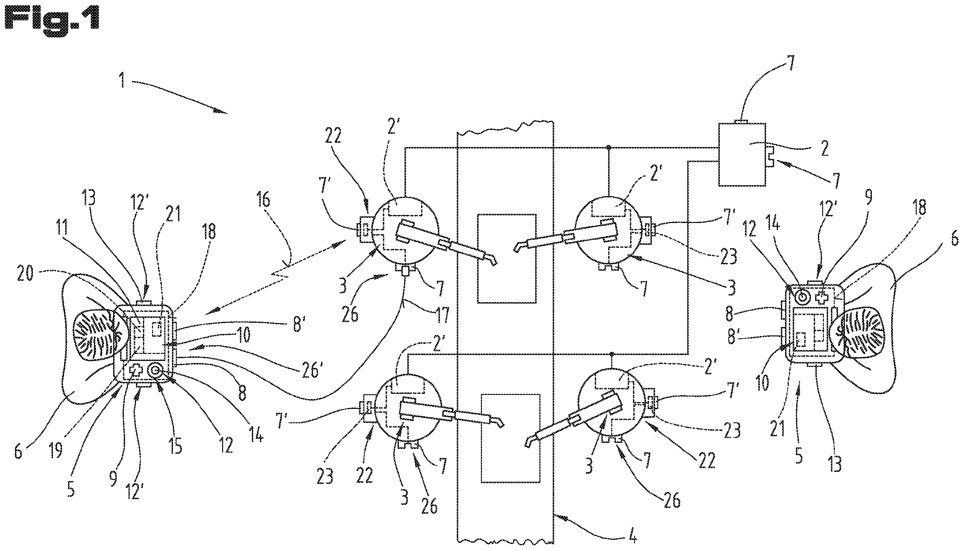

In Fig. 1 ist ein Ausführungsbeispiel eines industriellen Steuerungssystems 1 veranschaulicht. Ein solches Steuerungssystem 1 umfasst wenigstens eine stationär angeordnete, elektronische bzw. elektrotechnische Steuervorrichtung 2, 2'. Zumindest einzelne dieser stationären Steuervorrichtungen 2, 2' sind dabei in steuerungstechnischer bzw. funktionaler Hinsicht verschiedenen, plangemäß zu steuernden Maschinen 3 zugeordnet. Dementsprechend kann mit diesen Steuervorrichtungen 2, 2' eine komplexe industrielle Anlage 4, beispielsweise eine Produktions- bzw. Montageanlage, hinsichtlich der jeweiligen Abläufe gesteuert werden. Hierzu ist die wenigstens eine stationäre Steuervorrichtung 2, 2' mit entsprechenden Sensoren und Aktoren einer zu steuernden Maschine 3 bzw. Anlage 4 verbunden, wie dies in vielfältigen Ausführungen aus dem Stand der Technik bekannt ist. Eine Teilkomponente einer solchen Anlage 4 kann dabei ein Transportsystem, beispielsweise Förderband sein, auf welchem zu bearbeitende Objekte bzw. Werkstücke entlang von einzelnen Bearbeitungsstationen befördert werden. Die einzelnen Bearbeitungsstationen können dabei jeweils wenigstens einen Industrieroboter oder eine sonstige automatisiert oder teilautomatisiert betreibbare Maschine 3 umfassen.

Die einzelnen stationären Steuervorrichtungen 2, 2' können durch beliebige datentechnische Verbindungen bzw. Netzwerktopologien zu einem steuerungstechnischen Verbund zusammengeschaltet sein. Dabei sind, wie an sich bekannt, sternförmige, baumartige, serielle und sonstige Netzwerktopologien bzw. Bussysteme möglich. Wesentlich ist, dass die diversen verteilt angeordneten Steuervorrichtungen 2, 2' zumindest ansatzweise datentechnisch miteinander vernetzt sind und somit in steuerungstechnischer Verbindung stehen bzw. in Wechselwirkung treten können und so im Verbund einen bestimmen Montage- bzw. Fertigungsablauf abwickeln können. Via den entsprechenden steuerungs- bzw. datentechnischen Verbund aus mehreren verteilt angeordneten, stationären Steuervorrichtungen 2, 2' sind also die jeweils benötigten Steuerungs- bzw. Regelungsabläufe innerhalb des Steuerungssystems 1 bzw. mittels der technischen Anlage 4 automatisiert oder zumindest teilautomatisiert ausführbar. Beispielhaft ist ein Montage- bzw. Bearbeitungsprozess dargestellt, in welchem vier Industrieroboter mit jeweils einer diesen funktional jeweils zugeordneten Steuervorrichtung 2' eingesetzt werden, und wobei ein zentraler Leit- bzw. Steuerrechner in Form der stationären Steuervorrichtung 2 vorgesehen ist.

Das entsprechende industrielle Steuerungssystem 1 umfasst weiters wenigstens ein mobiles bzw. tragbares, steuerungstechnisches Handbediengerät 5. Ein solches Handbediengerät 5 ist ortsveränderlich bzw. mobil, insbesondere seitens einer Bedienperson 6 tragbar und somit an verschiedene Einsatz- bzw. Verwendungsorte verbringbar. Wie an sich bekannt, kann ein solches Handbediengerät 5 zur Beobachtung und/oder Beeinflussung steuerungstechnischer Abläufe innerhalb des Steuerungssystems 1, insbesondere in Bezug auf die jeweiligen Steuervorrichtungen 2, 2' der jeweiligen Maschine 3, deren Maschinenteile, der Anlage 4 bzw. der diversen Anlagenteile, verwendet werden. Durch die ortsvariable Verbringbarkeit des Handbediengerätes 5 sind dabei die jeweiligen Abläufe bzw. technischen Prozesse, welche von den Maschinen 3 bzw. der Anlage 4 ausgeführt werden, für die jeweilige Bedienperson 6 verbessert einsehbar, insbesondere gut kontrollier- bzw. überwachbar.

Um selektiv einzelne der Maschinen 3 bzw. einzelne Anlagenteile der Anlage 4 steuerungstechnische beeinflussen bzw. beobachten zu können, ist das Handbediengerät 5 selektiv mit den jeweiligen Steuervorrichtungen 2, 2' in steuerungs- bzw. datentechnische Wechselwirkung versetzbar. Dies entspricht einem daten- bzw. steuerungstechnischen Zuordnungs- bzw. Anmeldevorgang zwischen dem Handbediengerät 5 und der jeweils benötigten bzw. gewünschten Maschine 3 bzw. Anlage 4, insbesondere gegenüber der jeweiligen Steuervorrichtung 2, 2' der jeweiligen Maschine 3 bzw. Anlage 4.

Hierzu umfasst die wenigstens eine Steuervorrichtung 2, 2' innerhalb des Steuerungssystems 1 wenigstens eine datentechnische Schnittstelle 7, 7' zur bedarfsweisen Herstellung und Beendigung einer steuerungstechnischen Wechselwirkung gegenüber einem kommunikationskompatiblen, steuerungstechnischen Handbediengerät 5. Die datentechnischen Schnittstellen 7, 7' können dabei in örtlicher Hinsicht den jeweiligen Steuervorrichtungen 2, 2' unmittelbar zugeordnet sein, oder entfernt von den jeweiligen elektronischen Steuervorrichtungen 2, 2' und/oder distanziert von den jeweiligen Maschinen 3 angeordnet sein, sodass für eine Bedienperson 6 anhand der diversen Positionen der Schnittstellen 7, 7' nicht unbedingt eine funktionale Zuordnung zur jeweiligen Steuervorrichtung 2, 2' abgeleitet werden kann.

Zum Aufbau einer solchen steuerungstechnischen Wechselwirkung zwischen einer der Steuervorrichtungen 2, 2' und einem für eine Bedienperson 6 in technischer Hinsicht grundsätzlich tauglich erscheinenden, tragbaren Handbediengerät 5 ist auch am Handbediengerät 5 wenigstens eine datentechnische Schnittstelle 8, 8' ausgebildet. Diese zumindest eine datentechnische Schnittstelle 8, 8' ist dabei kompatibel, insbesondere kommunikationskompatibel, zu wenigstens einer der datentechnischen Schnittstellen 7, 7' der diversen Steuervorrichtungen 2, 2' ausgeführt. Die datentechnischen Schnittstellen 8, 8' an den portablen Handbediengeräten 5 können dabei durch drahtlose Schnittstellen 8', insbesondere durch funktechnische Kommunikationsports, und/oder durch drahtgebundene Schnittstellen 8, insbesondere durch kabelgebundene, datentechnische Stecker-Schnittstellen 26, 26' gebildet sein. Solche Stecker-Schnittstellen 26, 26' für den bedarfsweisen Auf- und Abbau einer Kabelverbindung 17 können dabei unmittelbar am Gehäuse des Handbediengerätes 5 und/oder in der Nähe der jeweiligen stationären Steuervorrichtung 2, 2', beispielsweise in der Nähe einer zu steuernden Maschine 3 vorgesehen sein, oder unmittelbar an einem Gehäuse einer zu steuernden Maschine 3 ausgeführt sein. Eine eindeutig nachvollziehbare bzw. unmissverständlich erkennbare Zuordnung zwischen einem bedarfsweise an- und abkoppelbaren, mobilen Handbediengerät 5 und einer Maschine 3 bzw. deren Steuervorrichtung 2, 2' ist daher für eine Bedienperson 6 nicht immer einfach. Diese Schwierigkeit tritt bei fix bzw. permanent zugeordneten Handbediengeräten 5 nicht bzw. kaum auf, ist jedoch bei gattungsgemäßen Handbediengeräten 5, welche über deren Schnittstelle 8, 8' mit Schnittstellen 7, 7' von stationären Steuervorrichtungen 2, 2' wahl-und bedarfsweise in Wechselwirkung treten können, insbesondere selektiv genutzt werden können, eine Herausforderung für die Bedienperson 6 bzw. ein Risiko für Irrtümer und damit eine mögliche Fehler- bzw. Gefahrenquelle. Durch spezielle Anmelde- bzw. Pairing-Verfahren, wie sie zum Beispiel aus der auf die Anmelderin zurückgehenden DE10110776A1 oder EP1866712B1 bekannt sind, kann diesen Problemen entgegengewirkt werden. Trotzdem kann es im Betrieb bzw. in der Verwaltung solcher Steuerungssysteme 1 für komplexe technische Anlagen 4 bzw. für schwer überschaubare Maschinen 3 zu größeren Herausforderungen für die Bedienperson 6 kommen und besteht somit ein Bedarf an entsprechenden Verbesserungen, wie dies im Nachstehenden dargelegt wird.

Wie an sich bekannt, können mittels dem mobilen bzw. tragbaren Handbediengerät 5 seitens einer befugten Bedienperson 6 steuerungstechnische Beeinflussungen der Abläufe, beispielsweise der Bewegungsabläufe oder der Prozessabläufe, der einzelnen Maschinen 3 bzw. der gesamten Anlage 4 vorgenommen werden. Hierzu ist am Handbediengerät 5 wenigstens ein von einer Bedienperson 6 manuell betätigbares Bedienelement 9 vorgesehen. Solche Bedienelemente 9 können durch hardwaretechnisch ausgeführte Schalt- bzw. Betätigungselemente, insbesondere durch Joysticks, Drehräder, Trackballs, Schaltwippen und dergleichen gebildet sein. Die Bedienelemente 9 zur Beeinflussung der steuerungstechnischen Abläufe können aber auch sogenannte Softkeys umfassen, welche am Handbediengerät 5 softwaretechnisch implementiert sind und insbesondere an einem berührungssensitiven Display 10 des Handbediengerätes 5 bei Bedarf bzw. Notwendigkeit eingeblendet sein können. Entsprechend einer vorteilhaften Ausführungsform sind das Display 10 oder zumindest Abschnitte des Displays 10 durch einen sogenannten Touch-Screen 11 gebildet. Ein solcher Touch-Screen 11 stellt somit - wie an sich bekannt - ein kombiniertes Ein- und Ausgabeelement dar, mit welchem steuerungs- bzw. datentechnische Eingaben in Bezug auf das Steuerungssystem 1 bzw. in Bezug auf die jeweils angebundene Steuervorrichtung 2, 2' vorgenommen werden können und mit welchem zugleich systemrelevante Informationen bzw. Daten visualisiert werden können.

Nachdem mittels dem zumindest einen Bedienelement 9 am Handbediengerät 5 auch potentiell sicherheitskritische bzw. gefahrbringende Steuerbefehle abgegeben bzw. anderweitig gravierende Ablaufveränderungen gegenüber einer Maschine 3 bzw. Anlage 4 vorgenommen werden können, ist am Handbediengerät 5 wenigstens ein von einer Bedienperson 6 manuell betätigbares Sicherheitsschaltelement 12, 12' ausgebildet. Durch Betätigung bzw. Aktivierung eines solchen Sicherheitsschaltelementes 12, 12' am Handbediengerät 5 ist - je nach Ausführung - eine Einleitung und/oder eine Beendigung von potentiell sicherheitskritischen Steuerbefehlen bzw. Steuerungsabläufen ermöglicht. Insbesondere kann wenigstens ein Zustimmtaster 13 am Handbediengerät 5 ausgeführt sein, welcher für eine wirksame Einleitung bzw. für eine definitive Ausführung von potentiell sicherheitskritischen Steuerungsabläufen bzw. Maschinenbewegungen seitens der Bedienperson 6 aktiv bzw. bewusst zu betätigen ist bzw. in eine vordefinierte Schaltstellung zu verbringen ist. Damit kann die Gefahr der Einleitung von ungewollten bzw. unbeabsichtigten Steuerbefehlen bzw. Bewegungsvorgängen minimiert werden. Ein solches Sicherheitsschaltelement 12' in Art eines Zustimmtasters 13 kann dabei je nach technischer Ausprägung auch mehrstufig bzw. mehrfunktional ausgeführt sein und dabei auch die unmittelbare Abschaltung bzw. Beendigung eines potentiell gefahrbringenden Bewegungs- oder Steuerungsablaufes ermöglichen. Hierzu kann der Zustimmtaster 13 von der Bedienperson entweder losgelassen werden, oder im Falle eines mehr- bzw. dreistufigen Zustimmtasters 13 in eine gesonderte, sogenannte Panik- bzw. Not-Aus-Stellung überführt werden, in welcher dann eine unmittelbare Beendigung der gefahrbringenden Abläufe bzw. Bewegungen bewirkt wird. Dies entspricht dabei einem Not-Stopp bzw. einem Panik-Stopp-Befehl. Häufig sind dabei mehre, wahlweise betätigbare Zustimmtaster 13 an verschiedenen, jeweils komfortabel erreichbaren Positionen am Handbediengerät 5 ausgeführt.

Vor allem dann, wenn das mobile Handbediengerät 5 auch zur Abgabe von potentiell sicherheitskritischen Steuerbefehlen vorgesehen ist bzw. zur Beeinflussung der Abläufe innerhalb des Steuerungssystems 1 verwendbar ist, so kann auch vorgesehen sein, dass am Handbediengerät 5 zumindest ein Sicherheitsschaltelement 12 in Art eines sogenannten Not-Aus-Schalters 14 ausgebildet ist. Insbesondere kann zumindest eines der Sicherheitsschaltelemente 12, 12' am Handbediengerät 5 durch ein Abschaltelement 15 definiert sein, welches zur Abwendung oder Beendigung von Gefahren- oder Unfallsituationen vorgesehen und dementsprechend gekennzeichnet und aufgebaut ist. Ein solches Abschaltelement 15 am Handbediengerät 5 kann dabei insbesondere in Art eines normierten, rot-gelben Not-Aus-Schalters 14, in Art eines bei Funktionsverfügbarkeit beleuchtbaren bzw. leuchtenden Aus-Schalters, oder in Art eines allgemeinen Aus-Schalters ausgeführt sein. Die jeweilige Ausführungsart kann dabei insbesondere durch länderspezifische Vorgaben, durch Normen, durch die Ausprägung der technischen Anlage 4 bzw. Maschine 3, und/oder durch die Art und Weise der Anbindung des Handbediengerätes 5 gegenüber dem Steuerungssystem 1 beeinflusst bzw. definiert sein. Beispielsweise kann die technische Ausführung des Abschaltelementes 15 auch dadurch definiert sein, ob das Handbediengerät 5 via eine drahtlose Kommunikationsverbindung 16, oder via eine Kabelverbindung 17 mit der jeweiligen Steuervorrichtung 2, 2', insbesondere mit der jeweils zu beeinflussenden Maschine 3 oder Anlage 4 steuerungs- bzw. signaltechnisch zu koppeln ist. Insbesondere bei Vorliegen einer Kabelverbindung 17, welche auch bedarfsweise an- und absteckbar ausgeführt sein kann, kann das Abschaltelement 15 am Handbediengerät 6 durch einen standardisierten bzw. normierten, rot-gelb gekennzeichneten Not-Aus-Schalter 14 gebildet sein. Vor allem dann, wenn das Handbediengerät 5 via eine drahtlose Kommunikationsverbindung 16 und/oder über eine bedarfsweise an- und absteckbare Kabelverbindung 17 mit der jeweiligen Steuervorrichtung 2, 2' koppelbar bzw. gekoppelt ist, so kann das Abschaltelement 15 zweckmäßigerweise durch einen bei Funktionsverfügbarkeit beleuchtbaren bzw. rot leuchtenden Aus-Schalter gebildet sein. Das Abschaltelement 15 kann aber auch durch einen allgemeinen Aus-Schalter gebildet sein, also durch Schaltelemente, welche sich in ihrem äußeren Erscheinungsbild von einem normierten Not-Aus-Schalter 14 augenscheinlich unterscheiden. Insbesondere ist das äußere Erscheinungsbild eines in Abhängigkeit seiner Funktionsverfügbarkeit beleuchtbaren Aus-Schalters bzw. eines allgemeinen Aus-Schalters unterschiedlich zum zumindest teilweise normierten Erscheinungsbild eines rot-gelben Not-Aus-Schalters 14 ausgeführt.

Die jeweilige technische Ausführung des zumindest einen Sicherheitsschaltelementes 12, 12' am Handbediengerät 5 kann dabei durch normative Vorgaben, durch länderspezifische Vorgaben, durch die Art der Kommunikationsverbindung zur Steuervorrichtung 2, 2' (kabelgebunden oder drahtlos) und/oder durch anlagenspezifische Charakteristika bestimmt bzw. beeinflusst sein. Insbesondere ist in Abhängigkeit davon, ob die steuerungstechnische Wechselwirkung zwischen dem Handbediengerät 5 und der jeweiligen Steuervorrichtung 2, 2' über eine Kabelverbindung 17, oder über eine drahtlose Kommunikationsverbindung 16 erfolgt bzw. aufgebaut ist, die technische Ausprägung des Sicherheitsschaltelementes 12, 12' am Handbediengerät 5 unterschiedlich. Insbesondere kann es in Abhängigkeit der Funktionszuverlässigkeit bzw. Technologie der drahtlosen Kommunikationsverbindung 16 kritisch sein, wenn während eines draht- bzw. kabellosen Betriebszustandes des Handbediengerätes 5 ein rot-gelb gekennzeichneter Not-Aus-Schalter 14 am Handbediengerät 5 vorliegt. Daraus ist ersichtlich, dass es unterschiedliche Ausprägungen bzw. Typen und Versionen von Handbediengeräten 5 geben kann, welche hinsichtlich ihrer datentechnischen Schnittstellen 8, 8' zu diversen Steuervorrichtungen 2, 2' grundsätzlich kommunikationskompatibel sind bzw. wären, welche jedoch den jeweiligen Umfeldbedingungen bzw. normativen Anforderungen und/oder den technischen Gegebenheiten einer zu steuernde Maschine 3 bzw. Anlage 4 nicht vollumfänglich gerecht sein könnten. Diese Problematik wird durch die anspruchsgemäßen Maßnahmen bereinigt bzw. hintangehalten.

Um das Handbediengerät 5 steuerungstechnisch in das Steuerungssystem 1 einbinden zu können, umfasst es ebenso wenigstens eine elektronische bzw. elektrotechnische Steuervorrichtung 18 basierend auf wenigstens einem Mikroprozessor bzw. Mikrocontroller. Insbesondere kann die Steuervorrichtung 18 im Handbediengerät 1 einen Hauptprozessor 19 umfassen, welcher zur Erfüllung bzw. Bereitstellung von funktionsrelevanten, softwaretechnisch implementierten Funktionen vorgesehen ist. Zudem kann die Steuervorrichtung 18 in einem Handbediengerät 5 für industrielle Steuerungszwecke einen Sicherheitsprozessor 20 umfassen, welcher mit dem Hauptprozessor 19 in datentechnischer Verbindung stehen kann und primär zur Erfüllung sicherheitstechnisch relevanter Aufgaben bzw. Funktionen implementiert ist.

Zur Umsetzung der jeweiligen Funktionalitäten des Handbediengerätes 5 ist in zumindest einem Speicher des Handbediengerätes 5 Software bzw. Programmcode hinterlegt. Der jeweilige Softwarestand bestimmt dabei die Funktionalitäten und/oder die Aktualität der implementierten Funktionen. Zudem sind für den Betrieb relevante, hardwarenahe Softwarekomponenten, insbesondere sogenannte Firmware-Releases für diverse Elektronikkomponenten des Handbediengerätes 5, im Handbediengerät 5 hinterlegt. Beispielsweise die funktechnische Kommunikationsschnittstelle 8', aber auch die sonstigen datentechnischen Schnittstellen 8, weisen elektronische Komponenten mit jeweils softwareimplementierten Funktionen auf. Die hierfür entsprechend benötigte Firmware ist dabei in geeigneten elektronischen Speichereinheiten, insbesondere in EEPROMs der diversen Elektronikkomponenten hinterlegt. Die Version bzw. Aktualität dieser Firmware kann dabei innerhalb mehrerer Handbediengeräte 5 unterschiedlich sein. Insbesondere der sogenannte Firmware-Stand kann aber den Funktionsumfang beeinflussen bzw. kann das jeweilige Firmware-Release für softwaregesteuerte Elektronikkomponenten im jeweiligen Handbediengerät 5 dessen Verhalten beeinflussen. Ebenso können die Abläufe bzw. Funktionalitäten eines eigenständigen Sicherheitsprozessors 20 im Handbediengerät 5 durch versions- bzw. updateabhängige Firmware- oder Softwarestände definiert bzw. beeinflusst sein.

In der Steuervorrichtung 18 des Handbediengeräts 5 ist darüber hinaus wenigstens eine Kennung 21 zur Identifikation des Handbediengerätes 5 gegenüber den peripheren bzw. externen Steuervorrichtungen 2, 2' hinterlegt. Diese Kennung 21 ist typischerweise in einem nicht-flüchtigen Speicher, beispielsweise in einem EEPROM-Speicher oder in einer SSD-Speichereinheit abgelegt. Wie an sich bekannt, kann eine solche Kennung 21 bzw. ein bestimmter Bestandteil der Kennung 21 im Zuge einer steuerungstechnischen Anmeldung bzw. Einbindung des Handbediengerätes 5 in das Steuerungssystem 1 auch zur eindeutigen Adressierung bzw. datentechnischen Unterscheidung der Teilnehmer im Steuerungssystem 1 eingesetzt werden.

Dies vor allem dann, wenn diese Kennung 21 bzw. zumindest ein bestimmter Teil der Kennung 21 eine ausreichend hohe Eindeutigkeit bzw. Unverkennbarkeit besitzt.

In Zusammenhang mit der erfindungsgemäßen Ausführung des Steuerungssystems 1 ist wesentlich, dass diese datentechnische Kennung 21 im Handbediengerät 5 zumindest die jeweilige Hardwareausführung und den jeweiligen Softwarestand des Handbediengerätes 5 kennzeichnet bzw. repräsentiert. Im Zuge der Herstellung einer steuerungstechnischen Wechselwirkung bzw. Kopplung zwischen einem Handbediengerät 5 und dem Steuerungssystem 1 bzw. gegenüber einer ihrer Steuervorrichtungen 2, 2' wird diese datentechnische Kennung 21 ausgehend von dem zur Ankopplung vorgesehen Handbediengerät 5 an die jeweilige Steuervorrichtung 2, 2' übertragen bzw. von der jeweiligen Steuervorrichtung 2, 2' abgerufen. Insbesondere erfolgt dabei ein sogenannter Handshake bzw. erfolgt eine Übermittlung oder Bereitstellung der datentechnischen Kennung 21 des Handbediengerätes 5, welche datentechnische Kennung 21 für die jeweilige hardware- und softwaretechnische Ausführung des Handbediengerätes 5 repräsentativ ist. Diese Kennung 21 wird also in das Steuerungssystem 1 übertragen bzw. von der jeweiligen Steuervorrichtung 2, 2' aufgenommen. Nachfolgend wird diese aus dem Handbediengerät 5 ausgelesene und für dessen Software- und Hardwarekonfiguration repräsentative Kennung 21 seitens des Steuerungssystems 1 bzw. von der jeweiligen, zur selektiven Ankopplung vorgesehenen Steuervorrichtung 2, 2' evaluiert, das heißt datentechnisch ausgewertet. Dabei wird in Abhängigkeit dieser Evaluierungsergebnisse die Verhaltensweise der jeweiligen Steuervorrichtung 2, 2' bzw. des gesamten Steuerungssystems 1 beeinflusst bzw. bestimmt. Insbesondere wird in Abhängigkeit der jeweils erfassten, datentechnischen Kennung 21 das Verhalten der Steuervorrichtung 2, 2' bzw. des Steuerungssystems 1 in Bezug auf (i) Zulässigkeit oder Nicht-Zulässigkeit der Herstellung einer steuerungstechnischen Wechselwirkung, in Bezug auf (ii) funktionales Verhalten während einer aktiven steuerungstechnischen Wechselwirkung und in Bezug auf (iii) funktionales Verhalten in Zusammenhang mit einer Beendigung einer steuerungstechnischen Wechselwirkung zwischen der Steuervorrichtung 2, 2' und dem Handbediengerät 5 definiert bzw. bestimmt. Insbesondere wird anhand dieser datentechnischen Kennung 21 bzw. durch dessen Evaluierung festgestellt, ob ein zulässiger bzw. gefährdungsfreier Kopplungsaufbau zwischen dem jeweiligen Handbediengerät 5 und der jeweiligen Steuervorrichtung 2, 2' möglich ist und/oder wie der laufende Betrieb und/oder wie die Beendigung dieser Kopplung bzw. der dementsprechenden steuerungstechnischen Wechselwirkung zu erfolgen hat. Dies insbesondere in Zusammenhang mit dem zumindest einen Sicherheitsschaltelement 12, 12', welches in jeweils unterschiedlichen technischen Ausprägungen am Handbediengerät 5 verbaut sein kann. Ähnliche Sachverhalte können in Zusammenhang mit unterschiedlichen Ausprägungen von Bedienelementen 9 an diversen Handbediengeräten 5 auftreten, welche Bedienelemente 9 für die Abgabe von potentiell sicherheitskritischen Steuer- bzw. Bewegungsabläufen vorgesehen bzw. geeignet sind.

Erfindungsgemäß wird daher anhand der für die jeweilige Hard- und Software-Ausführung des Handbediengerätes 5 charakteristischen Kennung 21 automatisiert oder teilautomatisiert detektiert bzw. überprüft, ob eine sichere und den diversen Vorgaben bzw. Sicherheitsrichtlinien entsprechende, steuerungstechnische Wechselwirkung aufgebaut werden kann bzw. darf. Dadurch wird insbesondere eine besonders funktionszuverlässiges bzw. möglichst fehlersicheres und zugleich anwenderfreundliches Steuerungssystem 1 geschaffen.

Insbesondere kann vorgesehen sein, dass durch die datentechnische Kennung 21 des Handbediengerätes 5 der jeweilige Softwarestand für den Hauptprozessor 19 im Handbediengerät 5 repräsentiert wird. Zudem kann vorgesehen sein, dass durch die im Handbediengerät 5 hinterlegte, datentechnische Kennung 21 der jeweilige Firmware-Stand für Elektronikkomponenten des Handbediengerätes 5, beispielsweise für kommunikationsrelevante Komponenten, repräsentiert ist. Ferner kann vorgesehen sein, dass durch die datentechnische Kennung 21 der jeweilige Firmware- oder Softwarestand eines allfälligen Sicherheitsprozessors 20 innerhalb des Handbediengerätes 5 repräsentiert bzw. charakterisiert wird. Besonders zweckmäßig ist es, wenn durch die datentechnische Kennung 21 des jeweiligen Handbediengerätes 5 die jeweilige technische Ausführung des zumindest einen, am Handbediengerät 5 verbauten bzw. implementierten Sicherheitsschaltelementes 12, 12' repräsentiert wird. Verschiedene technische Ausführungsmöglichkeiten von Sicherheitsschaltelementen 12, 12' wurden vorhergehend zumindest auszugsweise dargelegt.

Demnach kann das zumindest eine Sicherheitsschaltelement 12, 12' am Handbediengerät 5 durch ein von einer Bedienperson 6 bei Bedarf bzw. im Notfall betätigbares bzw. aktivierbares Abschaltelement 15 zur Abwendung oder Beendigung von Gefahren- oder Unfallsituationen gebildet sein. Dabei kann ein solches Abschaltelement 15 unter anderem in Art eines normierten, rot-gelben Not-Aus-Schalters 14, in Art eines bei Funktionsverfügbarkeit leuchtenden bzw. beleuchtbaren Aus-Schalters, oder in Art eines allgemeinen Aus-Schalters ausgebildet sein. Durch die im jeweiligen Handbediengerät 5 spezifisch hinterlegte datentechnische Kennung 21 wird dann insbesondere die jeweilige Art der technischen Ausführung des bzw. der am Handbediengerät 5 implementierten Abschaltelemente(s) 15 repräsentiert und im Zuge eines vorgesehenen Anmelde- bzw. Eingliederungsvorganges des Handbediengerätes 5 in das Steuerungssystem 1 diese datentechnische Kennung 21 dahingehend evaluiert, ob das zur Anbindung vorgesehene Handbediengerät 5 sicherheitstechnisch tauglich oder allenfalls untauglich ist. Dieses Evaluierungsergebnis kann vor allem in Abhängigkeit der jeweiligen Ausprägung bzw. des jeweiligen Aufstellungsortes des Steuerungssystems 1 bzw. der Maschine 3 bzw. Anlage 4 unterschiedlich ausfallen. Im Falle von mehreren Sicherheitsschaltelementen 12, 12' können dabei auch mehrere datentechnische Kennungen 21 vorhanden sein, oder es kann hierbei eine datentechnisch vergleichsweise umfassendere Kennung 21 umgesetzt sein.

Analog dazu kann durch die datentechnische Kennung 21 auch die technische Ausführung von am Handbediengerät 5 implementierten, steuerungsrelevanten Bedienelementen 9, insbesondere in Bezug auf Leuchtdrucktasten, Schlüsselschalter, Joysticks, Drehräder, 6D-Eingabeelemente und dergleichen repräsentiert werden. Auch dies hat Einfluss darauf, ob das jeweilige Handbediengerät 5 möglichst gefahrenfrei bzw. den normativen Vorgaben entsprechend in das Steuerungssystem 1 eingegliedert werden kann, oder eben nicht eingegliedert werden kann bzw. soll. Die jeweiligen datentechnischen Schnittstellen 7, 7' der Steuervorrichtungen 2, 2' können nämlich gegenüber den datentechnischen Schnittstellen 8, 8' grundsätzlich auch dann kompatibel sein, wenn eine Kommunikationsverbindung in sicherheitstechnischer Sicht zwischen der jeweiligen Ausführung des Handbediengerätes 5 und der jeweiligen technischen Ausführung der Steuervorrichtung 2, 2' nicht gefahrlos möglich wäre bzw. den normativen Vorgaben und/oder länderspezifischen Richtlinien nicht vollumfänglich entsprechen würde. Diese Problematik wird durch die vorhergehend geschilderten Maßnahmen bzw. durch die anspruchsgemäßen Maßnahmen bereinigt bzw. hintangehalten.

Die wenigstens eine datentechnische Schnittstelle 7, 7' von wenigstens einer stationären Steuervorrichtung 2, 2' kann entsprechend einer weiterbildenden Ausführungsform auch an einer baulich eigenständig ausgeführten elektrotechnischen bzw. elektronischen Anschlusseinheit 22 ausgebildet sein. Eine solche Anschlusseinheit 22 umfasst insbesondere eine elektronische Auswertevorrichtung 23, welche mit der wenigstens einen stationären Steuervorrichtung 2, 2' daten- oder signaltechnisch koppelbar ist, insbesondere in das gesamte Steuerungssystem 1 einbindbar ist. Eine solche Anschlusseinheit 22 kann - wie schematisch dargestellt - direkt den jeweiligen Maschinen 3 bzw. Anlagen 4 örtlich zugeordnet sein, oder aber davon distanziert positioniert sein, und über steuerungstechnische Verbindungen, beispielsweise Kabelverbindungen, mit den jeweiligen Steuervorrichtungen 2', 2 verbunden sein. Zweckmäßig ist es dabei, wenn die Evaluierung der datentechnischen Kennung 21 des jeweiligen Handbediengerätes 5 in der Anschlusseinheit 22, welche auch als Anschlussbox verstanden werden kann, vorgenommen wird. Die auf den jeweiligen Evaluierungsergebnissen beruhende Verhaltensweise des Steuerungssystems 1 bzw. der jeweiligen Steuervorrichtung 2, 2' wird somit durch die Anschlusseinheit 22 mitbeeinflusst. Durch die Ausbildung einer eigenständigen Anschlusseinheit 22 kann insbesondere eine einfache und nachträgliche Erweiterung eines bestehenden Steuerungssystems 1 vorgenommen werden.

Zweckmäßig kann es sein, wenn im Zuge eines beabsichtigten Kopplungsvorganges zwischen einer der Steuervorrichtungen 2, 2' und einer bestimmten Ausführung eines mobilen Handbediengerätes 5 die Evaluierung der datentechnischen Kennung 21 automatisiert bzw. zwangsweise vorgenommen wird. Dabei ist vorgesehen, dass das Steuerungssystem 1 bzw. die entsprechende Steuervorrichtung 2, 2' bei einem Ausbleiben oder bei einer Nicht-Erkennung einer datentechnischen Kennung 21 von Seiten eines zur steuerungstechnischen Anbindung vorgesehenen Handbediengeräts 5 in einen sicheren Zustand, insbesondere in den Not-Aus-Zustand überführt wird. Diese Überführung kann gegebenenfalls unter vorhergehender Vorwarnung bzw. unter Abgabe eines Hinweises gegenüber der Bedienperson 6 erfolgen. Dieser Hinweis kann dabei auch mit einem Zeitgeber in Verbindung stehen, insbesondere kann dabei ein sogenannter Watch-Dog eingebunden sein.

Ferner kann eine sogenannte Override-Funktionalität im Steuerungssystem 1, insbesondere im Handbediengerät 5 bzw. in der Anschlusseinheit 22 implementiert sein. Dabei ist vorgesehen, dass die Verhaltensweise des Steuerungssystems 1 mittels der Anschlusseinheit 22 derart konfiguriert bzw. einstellbar ist, dass eine steuerungstechnische Anbindung eines Handbediengerätes 5 auch dann ermöglicht wird, wenn das Handbediengerät 5 keine datentechnische Kennung 21 oder eine grundsätzlich ungeeignete datentechnische Kennung 21 aufweist. Dabei kann es zweckmäßig sein, diese Override-Funktion nur durch eine bewusste, aktive Handlung der Bedienperson 6 aktivieren bzw. freizuschalten zu können.

Analog dazu bzw. in ähnlicher Art und Weise kann vorgesehen sein, dass von der Steuervorrichtung 2, 2' bzw. von der baulich eigenständigen bzw. separt ausgeführten Anschlusseinheit 22 die Funktionsverfügbarkeit des zumindest einen Sicherheitsschaltelements 12, 12' am Handbediengerät 5 evaluiert wird und in Abhängigkeit eines positiven und/oder negativen Evaluierungsergebnisses das jeweilige Evaluierungsergebnis der Bedienperson 6 am steuerungstechnisch gekoppelten Handbediengerät 5 geeignet signalisiert wird. Dies kann durch textbasierte und/oder durch grafische Signalisierungs- bzw. Darstellungselemente erfolgen. Ebenso kann vorgesehen sein, dass ein positives Evaluierungsergebnis seitens des Steuerungssystems 1 bzw. seitens der Anschlusseinheit 22 bzw. seitens der Steuervorrichtung 2, 2' unmittelbar am Handbediengerät 5 signalisiert wird. Dies kann insbesondere via ein beleuchtbares bzw. im Falle eines positiven Evaluierungsergebnisses aktiv leuchtenden Abschaltelementes 15 erfolgen. Insbesondere kann durch eine evaluierungsabhängige Aktivierung einer vorzugsweise integrierten Beleuchtung des Abschaltelements 15 einer Bedienperson 6 signalisiert werden, ob eine positive bzw. zulässige Kopplung zwischen dem Handbediengerät 5 und dem Steuerungssystem 1 bzw. der jeweiligen Steuervorrichtung 2, 2' aufgebaut werden konnte bzw. aufgebaut wurde und/oder ob das entsprechende Abschaltelement 15 funktionsverfügbar ist. Im Falle eines beleuchtbaren Abschaltelements 15 wird ein solcher positiver bzw. zulässiger Kopplungsvorgang durch Aktivierung der Beleuchtung des Abschaltelementes 15 signalisiert, welche Beleuchtung vorzugsweise zur Abstrahlung von rotem bzw. rötlichem Licht vorgesehen ist.

Wie vorstehend bereits dargelegt, kann durch die angegebenen technischen Maßnahmen eine hohe Systemsicherheit erzielt werden. Dies vor allem in Verbindung mit bedarfsweise an- und absteckbaren, mobilen Handbediengeräten 5, aber auch in Bezug auf sogenannte Wireless-Terminals, also in Art von drahtlos kommunizierenden Handbediengeräten 5. Dabei können auch unterschiedliche normative Anforderungen, welche insbesondere in verschiedenen Ländern jeweils gelten, verbessert erfüllt bzw. durch die verschiedenen Bedienpersonen 6 gesichert eingehalten werden. Ebenfalls können verschiedene mobile Endgerätetypen mit verschiedenen optionalen Bedienelementen 9 und unterschiedlichen Softwareständen in einem erfindungsgemäßen Steuerungssystem 1 nicht zu einem Sicherheitsverlust führen. Neben optional implementierbaren Bedienelementen 9 an einem Handbediengerät 5 gibt es auch verschiedene Ausprägungen, wie der Not-Aus-Schalter 14 konfiguriert sein kann. Auch die Softwarestände der dezentral bzw. verteilt angeordneten Anschlusseinheiten 22 können innerhalb eines Konzerns unterschiedlich sein. Trotz dieses möglichen Mischbetriebes und der verschiedenen normativen Vorgaben besitzt ein erfindungsgemäß betriebenes Steuerungssystem 1 stets einen hohen Sicherheitslevel und ein normentsprechendes bzw. plangemäßes Verhalten.

Durch die vorgeschlagenen Maßnahmen können also verschiedenartige, länder- und/oder anlagenspezifische Vorgaben und/oder normative Regelungen zuverlässig erfüllt bzw. eingehalten werden. Beispielsweise bestimmte Vorgaben oder Richtlinien hinsichtlich des Erfordernisses eines normierten bzw. rot ausgeführten Not-Aus-Schalters14, der Einsetzbarkeit eines allgemeinen Stopp-Schalters bzw. der Verwendbarkeit eines beleuchtbaren bzw. leuchtfähigen Not-Aus-Schaltelementes können durch die angegebenen Maßnahmen zuverlässig eingehalten werden. Ferner können dadurch Regelungen bezüglich des Verhaltens des Steuerungssystems 1 bzw. eines Sicherheitsschaltkreises des Steuerungssystems 1 bzw. der technischen Anlage 4 oder Maschine 3 hinsichtlich des Verhaltens beim Ab- und Anstecken eines Handbediengerätes 5 mit einem Sicherheitsschaltelement 12, 12' zuverlässig umgesetzt werden. So gibt es einerseits Steuerungssysteme 1 bei welchen beim Abstecken eines Handbediengerätes 5 mit einem roten Not-Aus-Schalter 14 der Sicherheitsschaltkreis der Maschine 3 bzw. Anlage 4 aktiviert werden muss und daraufhin die jeweilige Maschine 3 bzw. Anlage 4 in einen Abschaltzustand bzw. in einen sicheren Zustand versetzt wird. Alternativ kann es Systeme geben, bei welchen beim Abstecken eines Handbediengerätes 5 mit einem allgemeinen Abschaltelement bzw. mit einem grauen Stopp-Schalter, der Sicherheitsschaltkreis deaktiviert bleiben kann, also keine Sicherheitsabschaltung erfolgen muss bzw. soll. Darüber hinaus kann es Steuerungssysteme 1 bzw. Maschinen 3 oder Anlagen 4 geben, bei welchen ein beleuchtetes bzw. bei Funktionsverfügbarkeit insbesondere rot leuchtendes Not-Aus-Abschaltelement 15 nicht verwendet werden darf, oder nur ein solches Abschaltelement 15 verwendet werden darf. Durch die datentechnische Kennung 21 und die anspruchsgemäßen Evaluierungsmaßnahmen kann diesen umfangreichen bzw. variantenreichen Regelungen zuverlässig Rechnung getragen werden.

Durch die anspruchsgemäßen Maßnahmen kann auch in einfacher und zuverlässiger Art und Weise sichergestellt werden, dass das mit dem Steuerungssystem 1 verbundene Handbediengerät 5 mit der Maschine 3 bzw. Anlage 4 interagieren kann und darf, sowie sichergestellt werden, dass eine definitive Kompatibilität besteht. Beispielsweise kann es in Abhängigkeit des Steuerungssystems 1 bzw. der Maschine 3 oder Anlage 4 vorkommen, dass bestimmte Bedienelemente 9 vorhanden sein müssen, dass gewisse Bedienelemente 9 nicht verwendet werden dürfen, dass unterschiedliche Softwarestände nicht verwendet werden dürfen, und/oder dass drahtlos kommunizierende Handbediengeräte 5 nicht verwendet werden dürfen, oder nur in einem sehr geringen bzw. eingeschränkten Wirkungsbereich neben der jeweiligen Anschlusseinheit 22 bzw. Maschine 3. Unter anderem diese Regelungen bzw. Anforderungen können durch die anspruchsgemäßen Maßnahmen zuverlässig eingehalten bzw. fehlersicher erfüllt werden.

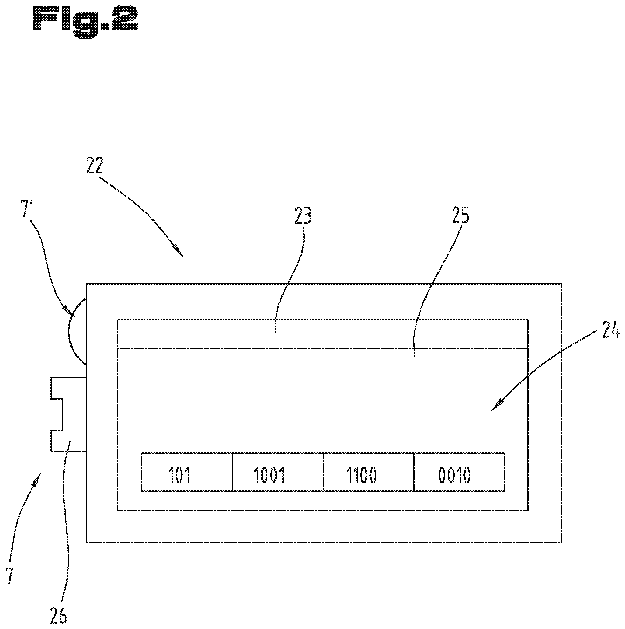

Die erfindungsgemäßen Maßnahmen ermöglichen somit die verbesserte Einhaltung einer Fülle von sicherheitstechnischen, anlagenspezifischen und länderspezifischen Vorgaben - und dies obwohl variantenreiche Möglichkeiten und damit einhergehende Schwierigkeiten eines Mischbetriebes von verschiedenen Handbediengeräten 5 und verschiedenen Anschlusseinheiten 22 bestehen. Diese Verschiedenheit kann sich dabei jeweils auf softwaretechnische und/oder hardwaretechnische Aspekte beziehen, wie dies im Nachfolgenden anhand einer Zusammenschau der Fig. 1 und 2 erläutert wird. Entsprechend einer zweckmäßigen Ausführung kann somit auch in der bzw. den Anschlusseinheit(en) 22 des Steuerungssystems 1 eine Kennung 24 vorgesehen sein, wie dies in Fig. 2 schematisch veranschaulicht ist. Diese bezüglich der jeweiligen Anschlusseinheit 22 spezifische bzw. charakteristische Kennung 24 liegt vorzugsweise unmittelbar in der jeweiligen Anschlusseinheit 22 vor. Insbesondere kann die Kennung 24 in einer nicht-flüchtigen Speichervorrichtung 25 der Anschlusseinheit 22 hinterlegt sein. Die datentechnischen Inhalte der Kennung 24 können sich dabei aus folgenden Parametern zusammenstellen, deren Inhalte bzw. Werte mit einer Änderung der Hardware und/oder Software der Anschlusseinheit 22 angepasst werden müssen, wobei diese Inhalts- bzw. Werteänderungen auch länder- und anlagenspezifisch verändert werden müssen bzw. daran anzupassen sind. In Bezug auf den jeweiligen Softwarestand kann sich die datentechnische Kennung 24 auf den jeweiligen Stand der Firmware der Elektronikkomponenten, und/oder auf den Stand der Software des Hauptprozessors, und/oder auf die Firm- und Software eines allfällig implementierten Sicherheitsprozessors der Anschlusseinheit 22 beziehen. In Bezug auf die jeweilige Hardwareausführung der jeweiligen Anschlusseinheit 22 kann vorgesehen sein, dass die datentechnische Kennung 24 wiederspiegelt, ob in der Anschlusseinheit 22 eine Halb-gesteckt-Erkennung und/oder eine Voll-gesteckt-Erkennung bezüglich einer Stecker-Schnittstelle 26 an der Anschlusseinheit 22 bzw. bezüglich der jeweiligen Steuervorrichtung 2, 2' implementiert ist, und/oder ob eine Strommessung bzw. Stromüberwachung zur automatisierten Überprüfung eines ordnungsgemäßen Anschlusses eines Handbediengerätes 5 an der jeweiligen Stecker-Schnittstelle 26 vorgesehen ist.

Die datentechnische Kennung 24 der jeweiligen Anschlusseinheit 22 bzw. Steuervorrichtung 2, 2 kann aber auch aus einem oder mehreren der nachfolgend gelisteten, länder- und anlagenspezifischen Parameter zusammengesetzt sein: a) maximale Anzahl von fehlgeschlagenen Ansteck- bzw. Kopplungsversuchen vor einer Not-Aus-Einleitung; und/oder b) Verhalten beim Anstecken eines Handbediengerätes 5, welches keine datentechnischen Kennung 21 besitzt; und/oder c) Verhalten beim Abstecken eines Handbediengerätes 5 mit einem normierten, rot-gelben Not-Aus-Schalter 14; und/oder d) Verhalten beim Abstecken eines Handbediengerätes 5 mit einem allgemeinen Stopp-Schalter; und/oder e) Verhalten beim Abstecken eines Handbediengerätes 5 mit einem bei Funktionsverfügbarkeit beleuchteten Aus-Schalter; und/oder f) Verhalten beim Anstecken eines Handbediengerätes 5 mit einer validen datentechnischen Kennung 21; und/oder g) Verhalten beim Anstecken eines Handbediengerätes 5 mit einem rot-gelben Not-Aus-Schalter 14, einem allgemeinen Stopp-Schalter und/oder einem beleuchtbaren Aus-Schalter. Des weiteren kann in der Speichervorrichtung 25 der Anschlusseinheit 22 eine Liste mit für die Anschlusseinheit 22 bzw. für deren zugeordnete Steuervorrichtung 2, 2' validen datentechnischen Kennungen 21 bzw. Parameterwerten von kompatiblen Handbediengeräten 5 hinterlegt sein.

Vom Handbediengerät 5 wird dabei die intern hinterlegte, datentechnische Kennnung 21 gleich beim Anstecken bzw. sofort beim drahtlosen Ankoppeln direkt an die Anschlusseinheit 22 gesendet. Die Anschlusseinheit 22 vergleicht daraufhin die empfangene datentechnische Kennung 21 bzw. deren Inhalte bzw. Parameterwerte mit der in ihr abgelegten Kompatibilitätsliste bzw. mit den in ihr abgespeicherten länder- und anlagenspezifischen Vorgaben. Daraus leitet sich das Verhalten der jeweiligen Steuervorrichtung 2, 2' bzw. des Steuerungssystems 1 beim Anstecken und/oder beim Abstecken dieses Handbediengerätes 5 und/oder im laufenden Betrieb im Zusammenwirken mit diesem Handbediengerät 5 ab.

Mögliche Verhaltensweisen beim a) Anstecken bzw. Anbinden, b) im Betrieb und c) beim Abstecken bzw. Abkoppeln eines Handbediengerätes 5 sind dabei wie folgt:
Zu a): Wird beim Anstecken bzw. drahtlosen Anbinden eines Handbediengerätes 5 keine datentechnische Kennung 21 erkannt, kann vorgesehen sein, dass die Steuervorrichtung 2, 2' bzw. die jeweilige Maschine 3 sofort oder nach einer definierten Zeitspanne in den sicheren Zustand (Not-Aus) übergeht. Wird hingegen eine datentechnische Kennung 21 empfangen, welche einen sicheren Betrieb bzw. eine zulässige Kombination erkennen lässt, so schaltet die Anschlusseinheit 22 das Handbediengerät 5 auf bzw. wird in diesem Fall der jeweiligen Steuervorrichtung 2, 2' eine Freigabe signalisiert bzw. erteilt.
Zu b): In Bezug auf das Verhalten der Steuervorrichtung 2, 2' bzw. des Steuerungssystems 1 während eines zulässigen bzw. freigegeben Betriebs mit dem Handbediengerät 5 kann vorgesehen sein, dass im Falles eines beleuchtbaren Abschaltelementes 15 bzw. Not-Aus-Schalters dessen Beleuchtung, insbesondere dessen LED, aktiviert wird und gegebenenfalls auch dessen Leuchtfunktion bzw. Signalisierungsfunktion überwacht wird. Ferner kann vorgesehen sein, dass im Falle von kompatiblen Bedienelementen 9 am Handbediengerät 5 diese freigeschaltet werden bzw. verwendet werden können bzw. dass im Falle von inkompatiblen Bedienelementen 9 diese nicht freigeschaltet werden und nicht verwendet werden können. Allenfalls können in einem solchen Fall limitierte Funktionen des Handbediengerätes 5, insbesondere dessen Beobachtungs- bzw. Visualisierungsfunktionen, in Bezug auf das jeweilige Steuerungssystem 2, 2' dennoch freigeschaltet werden.
Zu c): In Abhängigkeit der inhaltlichen Bedeutung bzw. Bedeutungen der datentechnischen Kennung 21 des Handbediengerätes 5 kann vorgesehen sein, dass im Zuge des Absteckens bzw. Abkoppeln des Handbediengerätes 5 die jeweilige Steuervorrichtung 2, 2' bzw. Maschine 3 aufgrund von Hot-Unplug-Funktionalität weiterläuft, und/oder aufgrund von nicht gegebener Hot-Unplug-Funktionalität in einen sicheren Zustand (Not-Aus) übergeht, und/oder in einen Fehlerzustand übergeht, weil ein Handbediengerät 5 mit einem allgemeinen Stopp-Taster abgesteckt bzw. abgekoppelt wurde.

Ein Kennzeichen der erfindungsgemäßen Maßnahmen liegt darin, dass hard- und softwaretechnisch ident ausgeführte Handbediengeräte 5 die gleiche datentechnische Kennung 21 aufweisen. Dadurch rufen sie auch jeweils dasselbe Verhalten an der Anschlusseinheit 22 bzw. an der jeweils zugeordneten Steuervorrichtung 2, 2' hervor. Das Verhalten des Steuerungssystems 1 bzw. der jeweiligen Steuervorrichtung 2, 2' ist nämlich durch die datentechnische Kennung 21 bzw. durch deren Inhalte bzw. Parameterwerte beeinflusst. Dass dabei die datentechnische Kennung 21 ausgehend vom Handbediengerät 5 gesendet oder auf Anforderung bereitgestellt und in der Anschlusseinheit 22 bzw. in der jeweiligen Steuervorrichtung 2, 2' evaluiert wird, ist dabei vergleichsweise zweckmäßiger als das dazu inverse Prinzip, insbesondere in Zusammenhang mit den Abläufen im Zuge eines Absteck- bzw. Abkoppelvorganges eines Handbediengerätes 5.

Die jeweils vordefinierten Verhaltensweisen des Steuerungssystems 1 können dabei in den Steuervorrichtungen 2, 2' bzw. in den Anschlusseinheiten 22 gespeichert sein, wobei das jeweilige Verhalten je nach datentechnischer Kennung 21 des zur Ankopplung vorgesehen Handbediengerätes 5 automatisiert aufgerufen bzw. eingestellt wird. Die datentechnische Kennung 21 stellt somit quasi eine Art von Schlüsselinformation dar, welche im Zuge eines Verbindungsaubaus vom Handbediengerät 5 an die betreffende Steuervorrichtung 2, 2' bzw. Anschlusseinheit 22 übertragen wird bzw. im Vorfeld der Herstellung einer steuerungstechnischen Beeinflussbarkeit vom Handbediengerät 5 übermittelt bzw. bereitgestellt werden muss.

Insbesondere kann vorgesehen sein, dass in einer Speichervorrichtung 25 von wenigstens einer der Anschlusseinheiten 22 eine Liste oder Datensätze hinterlegt sind und durch automatisiertes Vergleichen der von einem Handbediengerät 5 empfangenen datentechnischen Kennung 21 mit dieser Liste oder mit diesen Datensätzen eine zulässige oder unzulässige Kombination zwischen der jeweiligen Steuervorrichtung 2, 2' und diesem zur Ankopplung vorgesehen Handbediengerät 5 festgestellt wird.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Steuerungssystem
- 2, 2': Steuervorrichtung
- 3: Maschine
- 4: Anlage
- 5: Handbediengerät
- 6: Bedienperson
- 7, 7': datentechnische Schnittstelle
- 8, 8': datentechnische Schnittstelle
- 9: Bedienelement
- 10: Display
- 11: Touch-Screen
- 12, 12': Sicherheitsschaltelement
- 13: Zustimmtaster
- 14: Not-Aus-Schalter
- 15: Abschaltelement
- 16: drahtlose Kommunikationsverbindung
- 17: Kabelverbindung
- 18: Steuervorrichtung
- 19: Hauptprozessor
- 20: Sicherheitsprozessor
- 21: Kennung
- 22: Anschlusseinheit
- 23: Auswertevorrichtung
- 24: Kennung
- 25: Speichervorrichtung
- 26, 26': Stecker-Schnittstelle

## Patentansprüche

1. Verfahren zum Betreiben eines industriellen Steuerungssystems (1), umfassend wenigstens eine stationäre Steuervorrichtung (2, 2') und wenigstens ein von einer Bedienperson (6) tragbares, steuerungstechnisches Handbediengerät (5), welche wenigstens eine Steuervorrichtung (2, 2') mit Sensoren und Aktoren einer zu steuernden Maschine (3) oder Anlage (4) verbindbar ist und welche wenigstens eine Steuervorrichtung (2, 2') wenigstens eine datentechnische Schnittstelle (7, 7') zur bedarfsweisen Herstellung und Beendigung einer steuerungstechnischen Wechselwirkung mit wenigstens einem der tragbaren, steuerungstechnischen Handbediengeräte (5) aufweist, wobei eine solche steuerungstechnische Wechselwirkung via zumindest eine datentechnische Schnittstelle (8, 8') eines anzubindenden Handbediengerätes (5) aufgebaut wird, und
wobei wenigstens eines der Handbediengeräte (5) wenigstens ein von einer Bedienperson (6) manuell betätigbares Sicherheitsschaltelement (12, 12') zur Einleitung und/oder Beendigung von potentiell sicherheitskritischen Steuerbefehlen und/oder Steuerungsabläufen aufweist,
und mit wenigstens einer den jeweiligen Handbediengeräten (5) zugewiesenen datentechnischen Kennung (21) zur Identifikation des jeweiligen Handbediengerätes (5) gegenüber wenigstens einer der Steuervorrichtungen (2, 2'),
**dadurch gekennzeichnet,**
**dass** die datentechnische Kennung (21) des Handbediengerätes (5) zumindest die jeweilige Hardwareausführung und den jeweiligen Softwarestand des jeweiligen Handbediengerätes (5) repräsentiert,
**dass** die datentechnische Kennung (21) vor der Herstellung einer steuerungstechnischen Wechselwirkung ausgehend von einem zur Anbindung vorgesehenen Handbediengerät (5) an wenigstens eine Steuervorrichtung (2, 2') übertragen oder von wenigstens einer der Steuervorrichtungen (2, 2') abgerufen wird,
**dass** die datentechnische Kennung (2, 2') von wenigstens einer der Steuervorrichtungen (2, 2') evaluiert wird,
und **dass** in Abhängigkeit dieser Evaluierungsergebnisse die Verhaltensweise der jeweiligen Steuervorrichtung (2, 2') oder des gesamten Steuerungssystems (1) in Bezug auf (i) Zulässigkeit oder Nicht-Zulässigkeit der Herstellung einer steuerungstechnischen Wechselwirkung, in Bezug auf (ii) funktionales Verhalten während einer aktiven steuerungstechnischen Wechselwirkung und in Bezug auf (iii) funktionales Verhalten in Zusammenhang mit einer Beendigung einer steuerungstechnischen Wechselwirkung zwischen der jeweiligen Steuervorrichtung (2, 2') und dem Handbediengerät (5) bestimmt wird.

2. Verfahren nach Anspruch 1, **dadurch gekennzeichnet, dass** durch die datentechnische Kennung (21) der jeweilige Softwarestand für einen Hauptprozessor (19) des jeweiligen Handbediengerätes (5) repräsentiert wird.

3. Verfahren nach Anspruch 1 oder 2, **dadurch gekennzeichnet, dass** durch die datentechnische Kennung (21) der jeweilige Firmwarestand von Elektronikkomponenten des jeweiligen Handbediengerätes (5) repräsentiert wird.

4. Verfahren nach einem der vorhergehenden Ansprüche, **dadurch gekennzeichnet, dass** durch die datentechnische Kennung (21) der Firmware- oder Softwarestand eines Sicherheitsprozessors (20) im jeweiligen Handbediengerät (5) repräsentiert wird.

5. Verfahren nach einem der vorhergehenden Ansprüche, **dadurch gekennzeichnet, dass** durch die datentechnische Kennung (21) die technische Ausführung des zumindest einen Sicherheitsschaltelementes (12, 12') am jeweiligen Handbediengerät (5) repräsentiert wird.

6. Verfahren nach einem der vorhergehenden Ansprüche, **dadurch gekennzeichnet, dass** das zumindest eine Sicherheitsschaltelement (12, 12') am Handbediengerät (5) durch ein Abschaltelement (15) zur Abwendung oder Beendigung von Gefahren- oder Unfallsituationen gebildet ist, wobei ein solches Abschaltelement (15) in Art eines normierten, rot-gelben Not-Aus-Schalters (14), in Art eines bei Funktionsverfügbarkeit beleuchtbaren oder leuchtfähigen Aus-Schalters, oder in Art eines allgemeinen Aus-Schalter ausgebildet sein kann, und dass durch die datentechnische Kennung (21) die jeweilige Art der technischen Ausführung des am jeweiligen Handbediengerät (5) implementierten Abschaltelementes (15) repräsentiert wird.

7. Verfahren nach einem der vorhergehenden Ansprüche, **dadurch gekennzeichnet, dass** durch die datentechnische Kennung (21) die technische Ausführung von am jeweiligen Handbediengerät (5) implementierten, steuerungsrelevanten Bedienelementen (9), insbesondere in Bezug auf Leuchtdrucktaster, Schlüsselschalter, Joysticks, oder Drehräder, repräsentiert wird.

8. Verfahren nach einem der vorhergehenden Ansprüche, **dadurch gekennzeichnet, dass** die datentechnische Schnittstelle (7, 7') in Bezug auf die wenigstens eine stationäre Steuervorrichtung (2, 2') an einer baulich eigenständig ausgeführten Anschlusseinheit (22) ausgebildet ist, welche Anschlusseinheit (22) eine elektronische Auswertevorrichtung (23) umfasst und welche Auswertevorrichtung (23) mit der wenigstens einen stationären Steuervorrichtung (2, 2') daten- oder signaltechnisch koppelbar ist.

9. Verfahren nach Anspruch 8, **dadurch gekennzeichnet, dass** die Evaluierung der datentechnischen Kennung (21) in der Anschlusseinheit (22) vorgenommen wird und die auf den jeweiligen Evaluierungsergebnissen beruhende Verhaltensweise des Steuerungssystems (1) oder der jeweiligen Steuervorrichtung (2, 2') durch die Anschlusseinheit (22) mitbeeinflusst wird.

10. Verfahren nach einem der vorhergehenden Ansprüche, **dadurch gekennzeichnet, dass** im Zuge eines Kopplungsvorganges zwischen wenigstens einer der stationären Steuervorrichtungen (2, 2') und einem Handbediengerät (5) die Evaluierung der datentechnischen Kennung (21) automatisiert vorgenommen wird, und dass das Steuerungssystem (1) oder die wenigstens eine Steuervorrichtung (2, 2') bei einem Ausbleiben oder bei einer Nicht-Erkennung einer datentechnischen Kennung (21) in einen sicheren Zustand, insbesondere in den Not-Aus-Zustand, überführt wird.

11. Verfahren nach Anspruch 8 und 10, **dadurch gekennzeichnet, dass** die Verhaltensweise des Steuerungssystems (1) oder von wenigstens einer der stationären Steuervorrichtungen (2, 2') mittels der Anschlusseinheit (22) derart konfigurierbar ist, dass eine steuerungstechnische Anbindung eines Handbediengerätes (5), welches keine datentechnische Kennung (21) aufweist, ermöglicht wird.

12. Verfahren nach einem der vorhergehenden Ansprüche, **dadurch gekennzeichnet, dass** von der wenigstens einen stationären Steuervorrichtung (2, 2') oder der Anschlusseinheit (22) die Funktionsverfügbarkeit des zumindest einen Sicherheitsschaltelementes (12, 12') am Handbediengerät (5) evaluiert wird und ein positives und/oder negatives Evaluierungsergebnis am steuerungstechnisch gekoppelten bzw. zur Kopplung vorgesehenen Handbediengerät (5) signalisiert wird.

13. Verfahren nach Anspruch 12, **dadurch gekennzeichnet, dass** ein positives Evaluierungsergebnis an einem Handbediengerät (5), welches mit einem beleuchtbaren oder aktiv leuchtfähigen Abschaltelement (15) versehen ist, durch Aktivierung der Beleuchtung des Abschaltelementes (15) signalisiert wird, wobei eine aktivierte Beleuchtung vorzugsweise zur Abstrahlung von rotem Licht vorgesehen ist.

14. Verfahren nach Anspruch 8, **dadurch gekennzeichnet, dass** in einer Speichervorrichtung (25) von wenigstens einer der Anschlusseinheiten (22) eine Liste oder Datensätze hinterlegt sind und durch automatisiertes Vergleichen der von einem Handbediengerät (5) empfangenen datentechnischen Kennung (21) mit dieser Liste oder mit diesen Datensätzen eine zulässige oder unzulässige Kombination zwischen der jeweiligen Steuervorrichtung (2, 2') und diesem zur Ankopplung vorgesehen Handbediengerät (5) festgestellt wird.

15. Industrielles Steuerungssystem (1) umfassend wenigstens eine stationäre Steuervorrichtung (2, 2') und wenigstens ein von einer Bedienperson (6) tragbares, steuerungstechnisches Handbediengerät (5), welche wenigstens eine Steuervorrichtung (2, 2') mit Sensoren und Aktoren einer zu steuernden Maschine (3) oder Anlage (4) verbindbar ist und welche wenigstens eine Steuervorrichtung (2, 2') wenigstens eine datentechnische Schnittstelle (7, 7') zur bedarfsweisen Herstellung und Beendigung einer steuerungstechnischen Wechselwirkung mit wenigstens einem der tragbaren, steuerungstechnischen Handbediengeräte (5) aufweist, wobei eine solche steuerungstechnische Wechselwirkung via zumindest eine datentechnische Schnittstelle (8, 8') eines anzubindenden Handbediengerätes (5) aufgebaut wird, und
wobei wenigstens eines der Handbediengeräte (5) wenigstens ein von einer Bedienperson (6) manuell betätigbares Sicherheitsschaltelement (12, 12') zur Einleitung und/oder Beendigung von potentiell sicherheitskritischen Steuerbefehlen und/oder Steuerungsabläufen aufweist,
und mit wenigstens einer den jeweiligen Handbediengeräten (5) zugewiesenen datentechnischen Kennung (21) zur Identifikation des jeweiligen Handbediengerätes (5) gegenüber wenigstens einer der Steuervorrichtungen (2, 2'),
**dadurch gekennzeichnet,**
**dass** die datentechnische Kennung (21) des Handbediengerätes (5) zumindest die jeweilige Hardwareausführung und den jeweiligen Softwarestand des jeweiligen Handbediengerätes (5) repräsentiert,
**dass** die datentechnische Kennung (21) vor der Herstellung einer steuerungstechnischen Wechselwirkung ausgehend von einem zur Anbindung vorgesehenen Handbediengerät (5) an wenigstens eine Steuervorrichtung (2, 2') übertragen oder von wenigstens einer der Steuervorrichtungen (2, 2') abgerufen wird,
**dass** die datentechnische Kennung (2, 2') von wenigstens einer der Steuervorrichtungen (2, 2') evaluiert wird,
und **dass** in Abhängigkeit dieser Evaluierungsergebnisse die Verhaltensweise der jeweiligen Steuervorrichtung (2, 2') oder des gesamten Steuerungssystems (1) in Bezug auf (i) Zulässigkeit oder Nicht-Zulässigkeit der Herstellung einer steuerungstechnischen Wechselwirkung, in Bezug auf (ii) funktionales Verhalten während einer aktiven steuerungstechnischen Wechselwirkung und in Bezug auf (iii) funktionales Verhalten in Zusammenhang mit einer Beendigung einer steuerungstechnischen Wechselwirkung zwischen der jeweiligen Steuervorrichtung (2, 2') und dem Handbediengerät (5) bestimmbar ist.

## Claims

1. A method for operating an industrial control system (1), comprising at least one stationary control device (2, 2') and at least one control-based hand-held terminal (5) portable by an operator (6), which at least one control device (2, 2') can be connected to sensors and actuators of a machine (3) or installation (4) to be controlled, and which at least one control device (2, 2') has at least one data interface (7, 7') for establishing and terminating a control-based interaction with at least one of the portable, control-based hand-held terminals (5) as needed, wherein such a control-based interaction is built via at least one data interface (8, 8') of a hand-held terminal (5) to be connected, and wherein at least one of the hand-held terminals (5) has at least one safety switching element (12, 12') that can be manually actuated by an operator (6) for initiating and/or terminating potentially safety-critical control commands and/or control processes, and having at least one data technical identifier (21) assigned to the respective hand-held terminals (5) for identifying the respective hand-held terminal (5) relative to at least one of the control devices (2, 2'),
**characterized in that**
the data technical identifier (21) of the hand-held terminal (5) represents at least the respective hardware version and the respective software status of the respective hand-held terminal (5),
the data technical identifier (21), prior to establishing a control-based interaction, is transmitted starting from a hand-held terminal (5) provided for connection to at least one control device (2, 2') or is called up from at least one of the control devices (2, 2'), the data technical identifier (21) is evaluated by at least one of the control devices (2, 2'), and **in that** the mode of behavior of the respective control device (2, 2') or of the entire control system (1) in relation to (i) permissibility or non-permissibility of the establishment of a control-based interaction, in relation to (ii) functional behavior during an active control-based interaction and in relation to (iii) functional behavior in connection with the termination of a control-based interaction between the respective control device (2, 2') and the hand-held terminal (5) is determined depending on these evaluation results.

2. The method according to claim 1, **characterized in that** the respective software status for a main processor (19) of the respective hand-held terminal (5) is represented by the data technical identifier (21).

3. The method according to claim 1 or 2, **characterized in that** the respective firmware status of the electronic components of the respective hand-held terminal (5) is represented by the data technical identifier (21).

4. The method according to one of the preceding claims, **characterized in that** the firmware or software status of a safety processor (20) in the respective hand-held terminal (5) is represented by the data technical identifier (21).

5. The method according to one of the preceding claims, **characterized in that** the technical execution of the at least one safety switching element (12, 12') on the respective hand-held terminal (5) is represented by the data technical identifier (21).

6. The method according to one of the preceding claims, **characterized in that** the at least one safety switching element (12, 12') on the hand-held terminal (5) is formed by a shutdown element (15) for avoiding or terminating dangerous or accident situations, wherein such a shutdown element (15) can be formed in the manner of a standardized red and yellow emergency-off switch (14), in the manner of an off switch that can be illuminated or that can glow to show functional availability, or in the manner of a general off switch, and **in that** the respective manner of the technical execution of the shutdown element (15) implemented on the respective hand-held terminal (5) is represented by the data technical identifier (21).

7. The method according to one of the preceding claims, **characterized in that** the technical execution of control relevant operating elements (9) implemented on the respective hand-held terminal (5) is represented by the data technical identifier (21), in particular relating to illuminated pushbuttons, key-operated switches, joysticks or rotating wheels.

8. The method according to one of the preceding claims, **characterized in that** the data technical interface (7, 7') is formed, in relation to the at least one stationary control device (2, 2'), on a terminal unit (22) constructed in a structurally independent manner, which terminal unit (22) comprises an electronic evaluation device (23) and which evaluation device (23) can be coupled with the at least one stationary control device (2, 2') by means of data or signal technology.

9. The method according to claim 8, **characterized in that** the evaluation of the data technical identifier (21) is carried out in the terminal unit (22), and the mode of behavior, based on the respective evaluation results, of the control system (1) or of the respective control device (2 , 2') is co-influenced by the terminal unit (22).

10. The method according to one of the preceding claims, **characterized in that**, in the course of coupling process between at least one of the stationary coupling devices (2, 2') and a hand-held terminal (5), the evaluation of the data technical identifier (21) is carried out in an automated manner, and **in that** the control system (1) or the at least one coupling device (2, 2') is brought into a safe condition, in particular the emergency-off condition, when a data technical identifier (21) is absent or not recognized.

11. The method according to claim 8 and 10, **characterized in that** the mode of behavior of the of the control system (1) or of at least one of the stationary control devices (2, 2') can be configured by means of the terminal unit (22) such that the control-based connection of a hand-held terminal (5), which has no data technical identifier (21), is enabled.

12. The method according to one of the preceding claims, **characterized in that** the at least one stationary control device (2, 2') or the terminal unit (22) evaluates the functional availability of the at least one safety switching element (12, 12') on the hand-held terminal (5), and a positive and/or negative evaluation result is signaled on the hand-held terminal (5), which is coupled by means of control technology and/or is provided for coupling.

13. The method according to claim 12, **characterized in that** a positive evaluation result is signaled on a hand-held terminal (5), which is provided with a shutdown element (15) that can be illuminated or can actively glow, by activation of the illumination of the shutdown element (15), wherein an active illumination is preferably provided for emitting red light.

14. The method according to claim 8, **characterized in that** a list or data sets are stored in a storage device (25) of at least one of the terminal units (22) and, by means of automated comparison of the data technical identifier (21) received by a hand-held terminal (5) with this list or with these data sets, a permissible or non-permissible combination between the respective control device (2, 2') and said hand-held terminal (5) provided for connection is determined.

15. An industrial control system (1), comprising at least one stationary control device (2, 2') and at least one control-based hand-held terminal (5) portable by an operator (6), which at least one control device (2, 2') can be connected to sensors and actuators of a machine (3) or installation (4) to be controlled, and which at least one control device (2, 2') has at least one data interface (7, 7') for establishing and terminating a control-based interaction with at least one of the portable, control-based hand-held terminals (5) as needed, wherein such a control-based interaction is built via at least one data interface (8, 8') of a hand-held terminal (5) to be connected, and
wherein at least one of the hand-held terminals (5) has at least one safety switching element (12, 12') that can be manually actuated by an operator (6) for initiating and/or terminating potentially safety-critical control commands and/or control processes, and having at least one data technical identifier (21) assigned to the respective hand-held terminals (5) for identifying the respective hand-held terminal (5) relative to at least one of the control devices (2, 2'),
**characterized in that**
the data technical identifier (21) of the hand-held terminal (5) represents at least the respective hardware version and the respective software status of the respective hand-held terminal (5),
the data technical identifier (21), prior to establishing a control-based interaction, is transmitted starting from a hand-held terminal (5) provided for connection to at least one control device (2, 2') or is called up from at least one of the control devices (2, 2'), the data technical identifier (21) is evaluated by at least one of the control devices (2, 2'),
and **in that** the mode of behavior of the respective control device (2, 2') or of the entire control system (1) in relation to (i) permissibility or non-permissibility of the establishment of a control-based interaction, in relation to (ii) functional behavior during an active control-based interaction and in relation to (iii) functional behavior in connection with the termination of a control-based interaction between the respective control device (2, 2') and the hand-held terminal (5) can be determined depending on these evaluation results.

## Revendications

1. Procédé de fonctionnement d'un système de commande (1) industriel, comprenant au moins un dispositif de commande (2, 2') stationnaire et au moins une console de commande manuelle (5) de pilotage portable par un opérateur (6), lequel dispositif de commande (2, 2') au moins au nombre de un peut être raccordé à des capteurs et actionneurs d'une machine (3) ou installation (4) à commander, et lequel dispositif de commande (2, 2') au moins au nombre de un comporte une interface (7, 7') de données pour la réalisation et l'arrêt, si nécessaire, d'une interaction de commande avec au moins une des consoles de commande manuelle (5) de pilotage portables, une telle interaction de commande étant établie via au moins une interface (8, 8') de données d'une console de commande manuelle (5) à relier, et
au moins une des consoles de commande manuelles (5) comportant au moins un élément de commutation de sécurité (12, 12') pouvant être actionné manuellement par un opérateur (6) pour le lancement et/ou l'arrêt d'instructions de commande et/ou de processus de commande potentiellement critiques en matière de sécurité,
et avec au moins un identifiant (21) de données affecté aux consoles de commande manuelles (5) respectives pour l'identification de la console de commande manuelle (5) respective vis-à-vis d'au moins un des dispositifs de commande (2, 2'),
**caractérisé en ce que**
l'identifiant (21) de données de la console de commande manuelle (5) représente au moins la version du matériel respective et la version du logiciel respective de la console de commande manuelle (5) respective,
avant la réalisation d'une interaction de commande, l'identifiant (21) de données est transmis à partir d'une console de commande manuelle (5) prévue pour la liaison vers au moins un dispositif de commande (2, 2') ou est appelé par au moins un des dispositifs de commande (2, 2'),
l'identifiant (21) de données est évalué par au moins un des dispositifs de commande (2, 2'),
et, en fonction de ces résultats d'évaluation, le comportement du dispositif de commande (2, 2') respectif ou de l'ensemble du système de commande (1) est déterminé en référence à (i) l'admissibilité ou la non-admissibilité de la réalisation d'une interaction de commande, en référence au (ii) comportement fonctionnel pendant une interaction de commande active et en référence au (iii) comportement fonctionnel en lien avec un arrêt d'une interaction de commande entre le dispositif de commande (2, 2') respectif et la console de commande manuelle (5).

2. Procédé selon la revendication 1, **caractérisé en ce que** la version du logiciel respective pour un processeur principal (19) de la console de commande manuelle (5) respective est représentée par l'identifiant (21) de données.

3. Procédé selon la revendication 1 ou 2, **caractérisé en ce que** la version du micrologiciel respective de composants électroniques de la console de commande manuelle (5) respective est représentée par l'identifiant (21) de données.

4. Procédé selon l'une des revendications précédentes, **caractérisé en ce que** la version du micrologiciel ou la version du logiciel d'un processeur de sécurité (20) dans la console de commande manuelle (5) respective est représentée par l'identifiant (21) de données.

5. Procédé selon l'une des revendications précédentes, **caractérisé en ce que** la réalisation technique de l'élément de commutation de sécurité (12, 12') au moins au nombre de un sur la console de commande manuelle (5) respective est représentée par l'identifiant (21) de données.

6. Procédé selon l'une des revendications précédentes, **caractérisé en ce que** l'élément de commutation de sécurité (12, 12') au moins au nombre de un sur la console de commande manuelle (5) est formé par un élément de coupure (15) destiné à détourner ou mettre fin à des situations de danger ou d'accident, un tel élément de coupure (15) pouvant être constitué à la façon d'un interrupteur d'arrêt d'urgence (14) rouge-jaune normalisé, à la façon d'un commutateur d'arrêt pouvant être éclairé ou qui est lumineux en cas de disponibilité fonctionnelle, ou à la façon d'un commutateur d'arrêt général, et **en ce que** le type respectif de la réalisation technique de l'élément de coupure (15) mis en oeuvre sur la console de commande manuelle (5) respective est représenté par l'identifiant (21) de données.

7. Procédé selon l'une des revendications précédentes, **caractérisé en ce que** la réalisation technique d'éléments de commande (9) importants pour le pilotage mis en oeuvre sur la console de commande manuelle (5) respective, en particulier en ce qui concerne des boutons-poussoirs lumineux, des commutateurs à clé, des joysticks ou des molettes, est représentée par l'identifiant (21) de données.

8. Procédé selon l'une des revendications précédentes, **caractérisé en ce que** l'interface (7, 7') de données est constituée par rapport au dispositif de commande (2, 2') stationnaire au moins au nombre de un sur une unité de connexion (22) réalisée de façon autonome au plan de la construction, laquelle unité de connexion (22) comprend un dispositif d'analyse (23) électronique, et lequel dispositif d'analyse (23) peut être couplé en termes de données ou de signaux au dispositif de commande (2, 2') stationnaire au moins au nombre de un.

9. Procédé selon la revendication 8, **caractérisé en ce que** l'évaluation de l'identifiant (21) de données est effectuée dans l'unité de connexion (22), et le comportement du système de commande (1) ou du dispositif de commande (2, 2') reposant sur les résultats de l'évaluation respectifs est influencé conjointement par l'unité de connexion (22).

10. Procédé selon l'une des revendications précédentes, **caractérisé en ce que**, au cours d'un processus de couplage entre au moins un des dispositifs de commande (2, 2') stationnaires et une console de commande manuelle (5), l'évaluation de l'identifiant (21) de données est effectuée de façon automatisée, et **en ce que** le système de commande (1) ou le dispositif de commande (2, 2') au moins au nombre de un est transféré vers un état sûr, en particulier dans l'état d'arrêt d'urgence en cas d'absence ou en cas de non-détection d'un identifiant (21) de données.

11. Procédé selon les revendications 8 et 10, **caractérisé en ce que** le comportement du système de commande (1) ou d'au moins un des dispositifs de commande (2, 2') stationnaires peut être configuré au moyen de l'unité de connexion (22) de telle sorte qu'une liaison en termes de pilotage d'une console de commande manuelle (5) qui ne comporte pas d'identifiant (21) de données est rendue possible.

12. Procédé selon l'une des revendications précédentes, **caractérisé en ce que** la disponibilité fonctionnelle de l'élément de commutation de sécurité (12, 12') au moins au nombre de un sur la console de commande manuelle (5) est évaluée par le dispositif de commande (2, 2') au moins au nombre de un ou par l'unité de connexion (22), et un résultat d'évaluation positif et/ou négatif est signalé sur la console de commande manuelle (5) couplée en termes de pilotage ou respectivement prévue pour le couplage.

13. Procédé selon la revendication 12, **caractérisé en ce qu'**un résultat d'évaluation positif est signalé par l'activation de l'éclairage de l'élément de coupure (15) sur une console de commande manuelle (5) qui est munie d'un élément de coupure (15) pouvant être éclairé ou qui est activement lumineux, un éclairage activé étant de préférence prévu pour l'émission de lumière rouge.

14. Procédé selon la revendication 8, **caractérisé en ce qu'**une liste ou des jeux de données sont stockés dans un dispositif de mémoire (25) d'au moins une des unités de connexion (22) et, par la comparaison automatisée de l'identifiant (21) de données reçu par une console de commande manuelle (5) avec cette liste ou avec ces jeux de données, une combinaison admissible ou inadmissible entre le dispositif de commande (2, 2') respectif et cette console de commande manuelle (5) prévue pour le couplage est constatée.

15. Système de commande (1) industriel, comprenant au moins un dispositif de commande (2, 2') stationnaire et au moins une console de commande manuelle (5) de pilotage portable par un opérateur (6), lequel dispositif de commande (2, 2') au moins au nombre de un peut être raccordé à des capteurs et actionneurs d'une machine (3) ou installation (4) à commander, et lequel dispositif de commande (2, 2') au moins au nombre de un comporte une interface (7, 7') de données pour la réalisation et l'arrêt, si nécessaire, d'une interaction de commande avec au moins une des consoles de commande manuelles (5) de pilotage portables, une telle interaction de commande étant établie via au moins une interface (8, 8') de données d'une console de commande manuelle (5) de commande à relier, et
au moins une des consoles de commande manuelles (5) de commande comportant au moins un élément de commutation de sécurité (12, 12') pouvant être actionné manuellement par un opérateur (6) pour le lancement et/ou l'arrêt d'instructions de commande et/ou de processus de commande potentiellement critiques en matière de sécurité,
et avec au moins un identifiant (21) de données affecté aux consoles de commande manuelles (5) respectives pour l'identification de la console commande manuelle (5) respective vis-à-vis d'au moins un des dispositifs de commande (2, 2'),
**caractérisé en ce que**
l'identifiant (21) de données de la console de commande manuelle (5) représente au moins la version du matériel respective et la version du logiciel respective de la console de commande manuelle (5) respective,
avant la réalisation d'une interaction de commande, l'identifiant (21) de données est transmis à partir d'une console de commande manuelle (5) prévue pour la liaison vers au moins un dispositif de commande (2, 2') ou est appelé par au moins un des dispositifs de commande (2, 2'),
l'identifiant (2, 2') de données est évalué par au moins un des dispositifs de commande (2, 2'),
et, en fonction de ces résultats d'évaluation, le comportement du dispositif de commande (2, 2') respectif ou de l'ensemble du système de commande (1) peut être déterminé en référence à (i) l'admissibilité ou la non-admissibilité de la réalisation d'une interaction de commande, en référence au (ii) comportement fonctionnel pendant une interaction de commande active et en référence au (iii) comportement fonctionnel en lien avec un arrêt d'une interaction de commande entre le dispositif de commande (2, 2') respectif et la console de commande manuelle (5).
